(19) Europäisches Patentamt / European Patent Office / Office européen des brevets

(11) **EP 2 551 312 A1**

(12) **EUROPEAN PATENT APPLICATION**

(43) Date of publication:
**30.01.2013 Bulletin 2013/05**

(51) Int Cl.:
*C09J 5/00* (2006.01)  *B32B 43/00* (2006.01)

(21) Application number: **12178500.0**

(22) Date of filing: **30.07.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Fujita, Masato**<br>  **Ibaraki-shi, Osaka 567-8680 (JP)**<br>• **Hirao, Akira**<br>  **Ibaraki-shi, Osaka 567-8680 (JP)** |
| (30) Priority: **28.07.2011 JP 2011165943** | (74) Representative: **Grünecker, Kinkeldey, Stockmair & Schwanhäusser**<br>**Leopoldstrasse 4**<br>**80802 München (DE)** |
| (71) Applicant: **NITTO DENKO CORPORATION**<br>**Ibaraki-shi, Osaka 567-8680 (JP)** | |

(54) **Method of reusably separating two adhered plates and apparatus used for the method**

(57)     Provided is a method of reusably separating two adhered plates, including step 1 for firmly adhering two plates adhered to each other via a pressure-sensitive adhesive sheet or a curable resin layer to a first jig and a second jig, respectively, step 2 for detaching the two plates by moving at least one of the first jig and the second jig to produce a shear stress causing breakage of the pressure-sensitive adhesive sheet or the curable resin layer, and step 3 for removing the two plates after detachment from the jigs, wherein, in the aforementioned step 1, one or both of the plates is(are) firmly adhered to the jig(s) via a silicone pressure-sensitive adhesive sheet or porous pressure-sensitive adhesive sheet. Using the method, two plates adhered to each other via a pressure-sensitive adhesive sheet or a curable resin layer can be stably and reusably detached by certainly fixing them by using jig fixtures.

## FIG. 1

**Description**

TECHNICAL FIELD OF THE INVENTION

The present invention relates to a method of reusably separating two plates adhered to each other via a pressure-sensitive adhesive sheet or a curable resin layer, without causing breakage or crack of the plates.

BACKGROUND OF THE INVENTION

Portable devices with display function such as mobile phone, portable information terminal (PDA: Personal Digital Assistant), portable game device, car navigation system and the like are becoming thinner at a remarkable speed in recent years, along with which a flat panel display such as liquid crystal display and the like to be mounted thereon is also required to be thinner. Therefore, for example, a display panel of a flat panel display incorporated into such portable device with display function is designed to be still thinner, and a transparent protection plate of a display panel is also considered to be thinner than 1.0 mm when it is a glass plate. However, when such thin display panel and a transparent protection plate thereof are adhered via a polyoxyalkylene pressure-sensitive adhesive sheet, they cannot be detached from each other without breakage or crack, since they have poor flexibility. In addition, for a flat panel display having a touch panel as its display panel, which is to be mounted on a portable device with display function, adhesion of a transparent protection plate to a glass plate with transparent electrodes, which is the operation plate of the touch panel, via a transparent pressure-sensitive adhesive sheet has been considered. However, the glass plate with transparent electrodes cannot be detached (cannot be detached for reuse) from the transparent protection plate without breakage or crack. Recently, moreover, it has been proposed to form a layer of a highly transparent curable resin by filling acrylic resin, urethane acrylate, silicone and the like, which cure with heat or UV, between the display panel and the transparent protection plate, and adhesion-integrating them. However, such acrylic, urethane acrylate and silicone curable resin layers that cure with heat or UV are also firmly adhere to the display panel and the transparent protection plate with a comparatively high adhesion force, and therefore, when the display panel and thin transparent protection plate need to be re-adhered, the transparent protection plate cannot be re-peeled without breakage or crack.
Given such situation, the Applicant of the present application has proposed a method of detaching two plates adhered to each other via a pressure-sensitive adhesive sheet or a curable resin layer by relatively moving the two plates in parallel to each other to cause a shear stress leading to the breakage of the pressure-sensitive adhesive sheet or curable resin layer (JP-A-2010-121134). This method enables detachment of two plates adhered to each other via a pressure-sensitive adhesive sheet or a curable resin layer, even when at least one of the two plates is thin and lacks flexibility, without substantially applying a load causing a big distortion leading to breakage or crack of the plate. This method is performed by, as described in JP-A-2010-121134, for example, adhering one of the two plates adhered via a pressure-sensitive adhesive sheet to a fixed base, firmly adhering an operation plate to the other plate, and moving the operation plate to produce a shear stress leading to the breakage of the pressure-sensitive adhesive sheet or the curable resin layer. The adhered two plates are generally firmly adhered to a fixed base and an operation plate with a double-faced pressure-sensitive adhesive sheet having heat detachability (that is, a double-faced pressure-sensitive adhesive sheet having a pressure-sensitive adhesion layer formed from a releasable, pressure-sensitive adhesive that is adhered by pressurization and detached by applying heat after adhesion), so that the plates after detachment can be easily separated from the fixed base and operation plate, and reused.

SUMMARY OF THE INVENTION

However, when the present inventors detached a display panel of a laminate wherein the display panel and a transparent protection plate are adhered to each other via a transparent pressure-sensitive adhesive sheet (adhesion laminate), which laminate is used for a device of a type permitting almost all operations of the device to be performed on a touch panel, from the transparent protection plate according to the method described in patent document 1, the transparent protection plate was separated from the operation plate or fixed base before detachment of the display panel and the transparent protection plate.
The present invention has been made in view of the above-mentioned situation, and the problem to be solved is to provide a method of reusably separating two plates adhered to each other via a pressure-sensitive adhesive sheet or a curable resin layer, which enables stable detachment of the two plates by certainly fixing them by using jig fixtures, even when at least one of the two plates has a surface to which an adhesive is difficult to adhere, such as a surface with antifouling treatment, and an apparatus used for the method.
Another problem to be solved is to provide a method of reusably separating two plates adhered to each other via a pressure-sensitive adhesive sheet or a curable resin layer, which enables stable detachment of the two plates by certainly holding and fixing them by a jig, even when at least one of the two plates is thin and poor in flexibility and has a surface to which an adhesive is difficult to adhere, without suffering from a load causing distortion (deformation) of such plate, and an apparatus used for the method.

The present invention employs the following constitution to solve the above-mentioned problems.

[1] A method of separating two adhered plates, comprising
step 1 for firmly adhering two plates adhered to each other via a pressure-sensitive adhesive sheet or a curable resin layer to a first jig and a second jig, respectively,
step 2 for detaching the two plates by moving at least one of the first jig and the second jig to produce a shear stress causing breakage of the pressure-sensitive adhesive sheet or the curable resin layer, and
step 3 for removing the two plates after detachment from the jigs,
wherein, in the aforementioned step 1, one or both of the plates is(are) firmly adhered to the jig(s) via a silicone pressure-sensitive adhesive sheet or porous pressure-sensitive adhesive sheet.

[2] The method of the above-mentioned [1], wherein at least one of the two plates has a surface with antifouling treatment, and
the surface with the antifouling treatment and the jig are firmly adhered to each other via the aforementioned silicone pressure-sensitive adhesive sheet or porous pressure-sensitive adhesive sheet.

[3] The method of the above-mentioned [1] or [2], wherein the aforementioned two plates are adhered via a pressure-sensitive adhesive sheet,
the two plates are optical plates, and the pressure-sensitive adhesive sheet is a transparent pressure-sensitive adhesive sheet.

[4] The method of the above-mentioned [1], wherein the two plates are adhered via a pressure-sensitive adhesive sheet,
one of the two plates is a display panel of a flat panel display, the other is a transparent protection plate of the aforementioned display panel, the pressure-sensitive adhesive sheet is a transparent pressure-sensitive adhesive sheet, the aforementioned transparent protection plate has one surface with antifouling treatment, and said surface with the antifouling treatment is adhered to the silicone pressure-sensitive adhesive sheet or porous pressure-sensitive adhesive sheet.

[5] An apparatus for separating two plates adhered to each other via a pressure-sensitive adhesive sheet or a curable resin layer, comprising a first jig and a second jig which are placed opposite, with at least one of them being movable,
wherein one or both of the first jig and the second jig has(have) an adhered part made of an adhesive surface of a silicone pressure-sensitive adhesive sheet or porous pressure-sensitive adhesive sheet,
which apparatus is used for detaching the two plates by setting the plates between the first jig and the second jig, firmly adhering one of the two plates to the first jig, firmly adhering the other to the second jig, and moving at least one of the first jig and the second jig.

[6] The apparatus of the above-mentioned [5], wherein the adhered part has an adsorption part for adsorbing the plates by suction.

[7] The apparatus of the above-mentioned [5] or [6], wherein at least one of the two plates has a surface with antifouling treatment, and
the surface with the antifouling treatment is firmly adhered to the jig.

[8] The apparatus of any one of the above-mentioned [5] - [7], wherein the two plates are adhered via a pressure-sensitive adhesive sheet,
two plates are optical plates, and the pressure-sensitive adhesive sheet is a transparent pressure-sensitive adhesive sheet.

[9] The apparatus of the above-mentioned [5] or [6], wherein one of the two plates is a display panel of a flat panel display, the other is a transparent protection plate of the aforementioned display panel, the pressure-sensitive adhesive sheet is a transparent pressure-sensitive adhesive sheet, the aforementioned transparent protection plate has one surface with antifouling treatment, and said surface with the antifouling treatment is adhered to the silicone pressure-sensitive adhesive sheet or porous pressure-sensitive adhesive sheet.

[10] A pressure-sensitive adhesive sheet comprised of a silicone pressure-sensitive adhesive sheet or a porous pressure-sensitive adhesive sheet, which is used for firmly adhering one or both of the aforementioned two plates to a jig in step 1 of the method of any one of the above-mentioned [1] - [4].

In the present specification, a display panel; a transparent protection plate configured adjacent to the display panel; a touch panel to be inserted between the display panel and the transparent protection plate; and the plate optical members set on the display surface side of the flat panel display, such as the constituent members of the touch panel and the like, which are included in a flat panel display, are generically referred to as the "optical plate". The "flat panel display" is a concept including liquid crystal display (LCD), plasma display (PDP), organic or inorganic electroluminescence display (ELD), surface emission display (SED) and the like.

In the present specification, moreover, the "surface with antifouling treatment" means a surface treated with an antifouling agent, and specifically means surfaces treated with a known fluorine antifouling agent, a known silicone antifouling agent and the like, which are described in JP-AH9-157582, JP-A-H11-217558, JP-A-2000-144097, JP-A-2005-290323, JP-A-2007-145884, JP-A-2008-156454, jP-A-2005-54029, JP-A-2008-88323, JP-A-2006-124417, JP-A-H9-157582 and the like.

According to the present invention, even when at least one of the two plates adhered to each other via a pressure-sensitive adhesive sheet or a curable resin layer has a surface to which an adhesive is difficult to adhere, such as a surface with antifouling treatment, the two plates can be stably detached since they are certainly held by jigs during the operation. Even when at least one of the two plates is thin and poor in flexibility and has a surface to which an adhesive is difficult to adhere, the two plates can be stably detached by being certainly held and fixed by a jig, without suffering from a load causing distortion (deformation) of such plate. As a result, the two plates can be reusably separated without manifestation of the quality degradation.

Particularly, two optical plates adhered via a transparent pressure-sensitive adhesive sheet or a curable resin layer, which are set on the display surface side of the flat panel display; for example, a display panel and a transparent protection plate, a display panel and a glass plate with transparent electrodes in a touch panel, a glass plate with transparent electrodes in a touch panel and a transparent protection plate etc., are thin, poor in flexibility, and one surface of a transparent protection plate is often subjected to an antifouling treatment. Using the method of the present invention, such two optical plates can be reusably separated without manifestation of the quality degradation.

BRIEF DESCRIPTION OF THE DRAWINGS

Fig. 1 is sectional view schematically showing, in the present invention, two plates adhered via a pressure-sensitive adhesive sheet or a curable resin layer, which are adhered to the first jig and the second jig, each via a silicone pressure-sensitive adhesive sheet.

Fig. 2 is sectional view schematically showing, in the present invention, two plates adhered via a pressure-sensitive adhesive sheet or a curable resin layer, which are adhered to the first jig and the second jig, each via a porous pressure-sensitive adhesive sheet.

Fig. 3 is a schematic sectional view of one embodiment of a porous pressure-sensitive adhesive sheet used in the present invention.

Fig. 4 is a schematic sectional view of other embodiment of a porous pressure-sensitive adhesive sheet used in the present invention.

Fig. 5 is a plane view schematically showing the surface, which opposes the plate, of a jig used in the present invention, wherein through-holes are partially formed in a silicone pressure-sensitive adhesive sheet or a porous pressure-sensitive adhesive sheet adhered to the opposing surface, and an adsorption part that adsorbs the plate by suction is formed in the through hole.

In the Figures, 1, 2 are plates, 3 is a pressure-sensitive adhesive sheet or a curable resin layer, 4 is a adhesion laminated plate, 5 is a silicone pressure-sensitive adhesive sheet, 6 is a porous pressure-sensitive adhesive sheet, 7A is a first jig, 7B is a second jig, 8 is a through-hole, 9 is a adsorption part by suction, 10 is a porous material, and 20 is a substrate.

DESCRIPTION OF EMBODIMENTS

In the method of the present invention that reusably separates two plates adhered via a pressure-sensitive adhesive sheet or a curable resin layer (hereinafter also to be simply referred to as "the method of the present invention"), examples of the two plates to be reusably separated include, but are not particularly limited to, plates made of various materials (plate-like materials) such as a glass plate, a metal plate, a plastic plate and the like. In the case of a plastic plate, a plate made of a comparatively highly rigid plastic material generally having a Young's modulus of generally not less than 1.5 GPa is the target. A plastic plate easily gets broken or damaged when it has a smaller plate thickness, and therefore, the method of the present invention is particularly effective for a plastic plate with a thickness of 5 mm or less. Since glass plates are poor in flexibility and easily get broken when the thickness is small, the method of the present invention is particularly effective for glass plates.

As explained in the aforementioned BACKGROUND OF THE INVENTION, a flat panel display such as liquid crystal display and the like to be mounted on portable devices with display function such as mobile phone, portable information terminal (PDA: Personal Digital Assistant), portable game device, car navigation system and the like is required to be thinner. A display panel of a flat panel display is designed to be still thinner, and a transparent protection plate of a display panel, a touch panel to be inserted between a display panel and a transparent protection plate, and the like are also becoming thinner. As such optical plate to be set on the display surface side of a flat panel display, a glass plate and a transparent plastic plate with comparatively high rigidity are used, and adjacent two optical plates are adhered to each other via a transparent pressure-sensitive adhesive sheet. Recently, moreover, it has been proposed to form a layer of a highly transparent curable resin by filling acrylic, silicone and the like, which cure with heat or UV, between the display panel and the transparent protection plate, and adhesion-integrating them. However, such acrylic, urethane acrylate and silicone curable resin layers that cure with heat or UV are also firmly adhere to the display panel and the transparent protection plate with a comparatively high adhesion force, and therefore, when the display panel and thin transparent protection plate need to be re-adhered, the transparent protection plate cannot be re-peeled from the display panel without breakage or crack. Accordingly, the method of the present invention is particularly effective when two optical plates adhered via such transparent pressure-sensitive adhesive sheet or highly transparent curable resin layer are separated from each other. To be specific, by using the method of the present invention, two optical plates adhered via a transparent pressure-sensitive adhesive sheet or a highly transparent curable resin layer (curable resin layer of acrylic, urethane acrylate, silicone and the like, which cures with heat or UV) (e.g., display panel and transparent protection plate, display panel and glass plate with transparent electrodes in touch panel, glass plate with transparent electrodes in touch panel and transparent protection plate etc.) can be reusably separated without breakage or crack, and an expensive optical plate can be reutilizable.

As the transparent protection plate of the display panel, a glass plate and a transparent plastic plate can be mentioned. Examples of the transparent plastic plate include plastic plates made from (meth)acrylic resin (e.g., PF#4A), polycarbonate (PC), polypropylene (PP), polyphenylene sulfide, poly (ethylene terephthalate) (PET), poly(ethylene naph-thalate) (PEN), triacetylcellulose (TAC) resin, ARSON resin, epoxy resin, polyimide resin, polyetherimide resin, polyamide resin, polysulfone, polyether sulfone and the like. The thickness thereof is about 0.01 - 5 mm. Examples of the glass plate include a soda glass plate, a borosilicate glass plate, a non-alkali glass plate and the like, and the thickness thereof is about 0.01 - 5 mm.

Examples of the glass plate with transparent electrodes in a touch panel include a soda glass plate, a borosilicate glass plate, a non-alkali glass plate and the like, and the thickness is about 0.01 - 5 mm.

In the present invention, the "pressure-sensitive adhesive sheet" used for the two plates adhered via a pressure-sensitive adhesive sheet or a curable resin layer is a pressure-sensitive adhesive sheet comprising a known pressure-sensitive adhesive such as acrylic, silicone, urethane and the like, which are used for adhering metal plates, plastic plates and the like by apparatuses and tools in various fields. While the thickness is not particularly limited, it is generally 10 - 1000 $\mu$m. The "transparent pressure-sensitive adhesive sheet" used for the two optical plates adhered via a transparent pressure-sensitive adhesive sheet or a highly transparent curable resin layer is a double-faced pressure-sensitive adhesive sheet comprised of an adhesive composition having high transparency, which generally has a thickness of about 20 - 250 $\mu$m, in view of the adhesion strength between the two optical plates and provision of a thin flat panel display.

Examples of the transparent pressure-sensitive adhesive sheet include known transparent pressure-sensitive adhesive sheets used for optical applications, and particularly preferred include transparent pressure-sensitive adhesive sheets of acrylic, silicone and the like, and the transparent polyoxyalkylene pressure-sensitive adhesive sheet proposed in JP-A-2008-266473 by the applicant of the present application (i.e., a transparent pressure-sensitive adhesive sheet made of a cured product obtained by curing a composition containing a polyoxyalkylene polymer containing at least one alkenyl group in one molecule, a compound containing two or more hydrosilyl groups on average in one molecule and a hydrosilylation catalyst).

The method of the present invention for reusably separating two plates adhered via a pressure-sensitive adhesive sheet or a curable resin layer comprises step 1 for firmly adhering two plates adhered to each other via a pressure-sensitive adhesive sheet or a curable resin layer to a first jig and a second jig, respectively, step 2 for detaching the two plates by moving at least one of the first jig and the second jig to produce a shear stress causing breakage of the pressure-sensitive adhesive sheet or the curable resin layer, and step 3 for removing the two plates after detachment from the jigs.

<First step> In the first step, two plates adhered via a pressure-sensitive adhesive sheet or a curable resin layer are respectively adhered to the first jig and the second jig. In this case, a constitution wherein one of the first jig and the second jig moves or both of them may move.

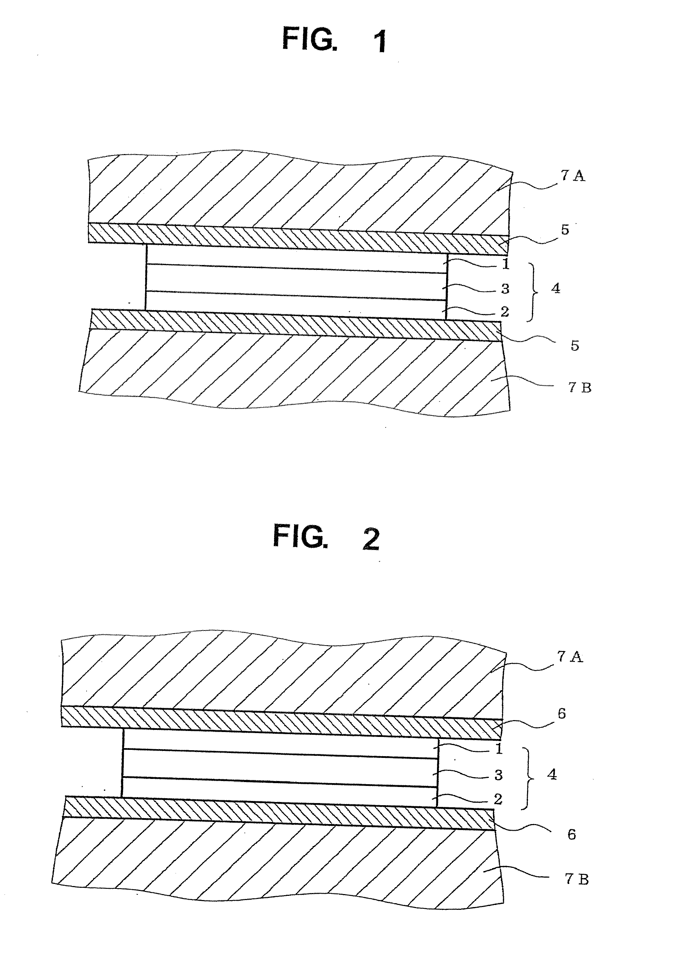

Fig. 1 shows that an adhesion laminated plate 4 wherein two plates 1 and 2 adhered via a pressure-sensitive adhesive sheet and a curable resin layer 3 and two plates 1 and 2 adhered via a pressure-sensitive adhesive sheet or curable resin layer 3 are adhered to the first jig 7A and the second jig 7B, respectively, via a silicone pressure-sensitive adhesive sheet 5.

The silicone pressure-sensitive adhesive sheet 5 is a pressure-sensitive adhesive sheet having at least an adhesive layer made of a silicone adhesive (hereinafter to be also referred to as "silicone adhesive layer"), and specific examples thereof include double-faced pressure-sensitive adhesive sheet made of a silicone adhesive layer alone, a pressure-sensitive adhesive sheet having a silicone adhesive layer on one side of a substrate, a double-faced pressure-sensitive adhesive sheet having a silicone adhesive layer on either side of a substrate, and a double-faced pressure-sensitive adhesive sheet having a silicone adhesive layer on one side of a substrate and an adhesive layer made of an adhesive other than the silicone adhesive on the other side of the substrate.

The silicone pressure-sensitive adhesive sheet 5 is used such that the silicone adhesive layer is adhered to the plates 1 and 2. As a result, since the silicone adhesive layer is rigidly adhered to the jig side surface of at least one of the plates 1 and 2, the two plates 1 and 2 are stably adhered to the jigs. Particularly, even when the jig side surface of at least one of the plates 1 and 2 is a surface with antifouling treatment, the silicone adhesive layer is rigidly adhered to the surface with antifouling treatment, and therefore, the two plates 1 and 2 are stably adhered to the jigs.

In this embodiment, at least one of the two plates 1 and 2 only needs to be firmly adhered to a jig via a silicone pressure-sensitive adhesive sheet. When only one of the two plates 1 and 2 is adhered to a jig via a silicone pressure-sensitive adhesive sheet, the other plate may be adhered by using a thermally strippable double-faced pressure-sensitive adhesive sheet (i.e., a double-faced pressure-sensitive adhesive sheet having a pressure sensitive adhesive layer formed from a detachable pressure sensitive adhesive which is adhered by pressurization and expresses detachability by applying heat after adhesion), a UV curing type detachable double-faced pressure-sensitive adhesive sheet (i.e., a double-faced pressure-sensitive adhesive sheet having a pressure sensitive adhesive layer formed from a detachable pressure sensitive adhesive (acrylic adhesive, urethane adhesive and the like), which is adhered by pressurization, cured by UV irradiation after adhesion and expresses detachability, on both surfaces of a support substrate) and the like. The other plate may be firmly adhered to a jig by using such pressure-sensitive adhesive sheet in combination or without using such pressure-sensitive adhesive sheet, by using a jig provided with an adsorption mechanism for adsorbing a plate by suction.

In this case, when the surface on the jig side of one of the two plates 1 and 2 is a surface with antifouling treatment, and the surface on the jig side of the other plate is a surface without antifouling treatment, a silicone pressure-sensitive adhesive sheet 5 is preferably used for the surface with antifouling treatment, a thermally strippable double-faced pressure-sensitive adhesive sheet, a UV curing type detachable double-faced pressure-sensitive adhesive sheet and the like may be used, instead of the silicone pressure-sensitive adhesive sheet 5, between the other plate without antifouling treatment and the jig, or a surface without antifouling treatment may be firmly adhered to a jig by using such pressure-sensitive adhesive sheet in combination or without using such pressure-sensitive adhesive sheet, by using a jig provided with an adsorption mechanism for adsorbing a plate by suction.

Examples of the substrate of the silicone pressure-sensitive adhesive sheet 5 include film substrates of poly (ethylene terephthalate), poly(butylene terephthalate), poly(ethylene naphthalate), polyethylene, polypropylene and the like, non-woven fabric using Manila hemp, rayon, polyester, pulp fiber and the like as a starting material, paper, a porous material and the like.

As the silicone adhesive of the silicone pressure-sensitive adhesive sheet 5, various silicone rubbers containing polydiorganosiloxane as a constituent component can be used without particular limitation. Examples of the organic group of polydiorganosiloxane include hydrocarbon groups such as alkyl group, aryl group, alkenyl group and the like. Examples of the alkyl group include methyl, ethyl, propyl and the like and methyl group is preferably used from the aspects of adhesive property, durability and the like. Examples of the aryl group include phenyl group and the like. When an addition reaction is used for crosslinking the silicone adhesive, an alkenyl group is preferably copolymerized. Examples of the alkenyl group include vinyl group, allyl group, butenyl group, hexenyl group and the like. Of these, vinyl group is preferably used. In addition, various functional groups such as hydroxyl group and the like may be introduced. Particularly, one having a hydroxyl group on both terminals can be preferably used. Examples of the polydiorganosiloxane include polydimethyl siloxane, polydiphenylsiloxane and a copolymer thereof, a mixture thereof and the like.

Of such polydiorganosiloxane, polydiorganosiloxane having a phenyl group in a molecule is preferable. While the content of the phenyl group is not particularly limited, its ratio to the organic group bonded to the silicon atom that polydiorganosiloxane has (ratio of the number of phenyl groups to the total number of organic groups) is preferably about 5 - 20%, more preferably about 7 - 18%.

While the degree of polymerization of polydiorganosiloxane is not particularly limited, it is generally preferably 500 - 10000, more preferably 2000 - 8000. One or more kinds of such polydiorganosiloxane can be used in an appropriate combination.

Polydiorganosiloxane may appropriately contain various silicone resins used for silicone adhesives. Silicone adhesives are used in the form of a partial condensate or mixture of the aforementioned silicone rubber and a silicone resin. The silicone resin is branched polyorganosiloxane containing a hydroxyl group bonded to the silicon atom in a molecule. Using the hydroxyl group, a partial condensation reaction can be performed with the aforementioned silicone rubber. For example, polyorganosiloxane comprised of a copolymer having at least one kind of unit selected from Munit ($R_3SiO_{1/2}$), Qunit ($SiO_2$), Tunit ($RSiO_{3/2}$) and Dunit ($R_2SiO$) (in the aforementioned unit, R is a monovalent hydrocarbon group or hydroxyl group) can be preferably used. Examples of the monovalent hydrocarbon group include alkyl group such as methyl group, ethyl group and propyl group, alkenyl group such as vinyl group and the like, and aryl group such as phenyl group and the like.

The aforementioned polyorganosiloxane comprised of a copolymer has a hydroxyl group, and may be introduced as necessary with various functional groups such as vinyl group and the like. The functional group to be introduced may cause a crosslinking reaction. As the aforementioned copolymer, MQ resin comprised of Mu nit and Q unit is preferable.

While the ratio (molar ratio) of Munit and Qunit, Tunit or Dunit is not particularly limited, the former:the latter = about 0.3:1 - 1.5:1, preferably about 0.5:1 - 1.3:1. One or more kinds of such silicone resins can be used in an appropriate combination.

While the content ratio (ratio of weight) of the aforementioned silicone rubber and silicone resin is not particularly limited, preferably 60 - 250 parts by weight, more preferably 80 - 200 parts by weight, of the silicone resin is used relative to 100 parts by weight of the silicone rubber. The silicone rubber and silicone resin may be used in combination or partial condensates thereof may be used.

The silicone adhesive may be a crosslinked structure. As the crosslinking agent, a peroxide crosslinking agent, or a siloxane crosslinking agent having an SiH group is preferable. The peroxide crosslinking agent affords crosslinking of a radical reaction type, and the siloxane crosslinking agent affords crosslinking of an addition reaction type using a hydrosilylation reaction of an alkenyl group such as vinyl group and the like and poliorganohydrogen siloxane. When a siloxane crosslinking agent is used, polyorganosiloxane halving a vinyl group is used as a silicone rubber and the like.

As the aforementioned peroxide crosslinking agent, various crosslinking agents conventionally used for silicone adhesives can be used without particular limitation. For example, benzoyl peroxide, t-butyl peroxybenzoate, dicumyl peroxide, t-butyl cumyl peroxide, t-butyloxide, 2,5-dimethyl-2,5-di(tert-butylperoxy)hexane, di-2,4-dichlorobenzoyl peroxide, bis-(2-tert-butylperoxyisopropyl)benzene, 1,1-bis(1,1-dimethylethylperoxy)-3,3,5-trimethylcyclohexane, 2,5-dimethyl-2,5-di-t-butylperoxyhexyne-3 and the like can be used. The amount of the peroxide crosslinking agent to be used is generally about 0.15 - 2 parts by weight, preferably 0.5 - 1.4 parts by weight, per 100 parts by weight of the silicone rubber.

As the siloxane crosslinking agent, for example, polyorganohydrogen siloxane having at least two hydrogen atoms on average, which are bonded to the silicon atom, in a molecule can be used. Examples of the organic group bonded to the silicon atom include alkyl group, phenyl group, alkyl halide group and the like, and methyl group is preferable since synthesis and handling are easy. The siloxane skeleton structure may be any of linear, branched and cyclic structures, with preference given to a linear structure.

The siloxane crosslinking agent is generally used in such an amount that 1 - 30, preferably 4 - 17, of the hydrogen atoms are bonded to the silicon atom relative to one vinyl group in the silicone rubber and silicone resin. When the hydrogen atom bonded to the silicon atom is less than one, sufficient cohesion strength cannot be obtained, and when it exceeds 30, the adhesion property tends to decrease. When a siloxane crosslinking agent is used, a platinum catalyst is generally used, but other various catalysts can also be used. When a siloxane crosslinking agent is used, polyorganosiloxane having a vinyl group is used as a silicone rubber, and the vinyl group is preferably about 0.0001 - 0.01 mol/100 g.

The silicone adhesive layer of the silicone pressure-sensitive adhesive sheet 5 can contain a filler. For example, as the inorganic filler, fine particles such as calcium carbonate, aluminum silicate, silica, zeolite, alumina, aluminum sulfate, glass and the like can be mentioned, and as the organic filler, crosslinked natural rubber fine particles, crosslinked isoprene rubber fine particles, crosslinked silicone rubber fine particles, cellulose powder, cork grain and the like can be mentioned. Of these fillers, crosslinked silicone rubber fine particles are preferably used. The crosslinked silicone rubber fine particles are produced by finely dispersing silicone oil in water (emulsion), crosslinking and curing the oil dispersed in water by hydroxylation to give a rubbery grain, and removing water. Examples of the crosslinked silicone rubber fine particles include commercially available TREFIL manufactured by Dow Corning Toray Co., Ltd. The shape of the filler is not particularly limited and those having various shapes such as sphere, needle, hollow and the like can be used, with preference given to a spherical filler. While the size of the filler is not limited, a filler smaller than the thickness of the silicone adhesive layer is preferably used, which is preferably 0.1 $\mu$m - 100 $\mu$m, generally 0.5 $\mu$m - 10 $\mu$m. The amount of the filler to be added is as described above, which is 0.5 - 40 parts by weight per 100 parts by weight of the silicone adhesive.

The silicone adhesive layer may further contain various additives where necessary.

The silicone adhesive layer of the silicone pressure-sensitive adhesive sheet 5 is generally formed by coating a solution obtained by dissolving a silicone adhesive and additive to be added as necessary in a solvent such as toluene and the like to a substrate, and then heating same to allow crosslinking. In addition, a method including forming a silicone adhesive layer on a release liner, and transferring the release liner onto a substrate and the like can be employed. When the silicone pressure-sensitive adhesive sheet 5 is a double-faced pressure-sensitive adhesive sheet comprised of a silicone adhesive layer alone free of a substrate, a silicone adhesive layer is formed on a release liner and the release liner is directly used. To form a silicone adhesive layer on a substrate, a priming agent can also be used to improve anchor property of the substrate and the silicone adhesive layer.

When a double-faced pressure-sensitive adhesive sheet comprises a silicone pressure-sensitive adhesive sheet 5 consisting only of a silicone adhesive layer, the silicone adhesive layer preferably has a thickness of about 15 - 100 $\mu$m.

When the silicone pressure-sensitive adhesive sheet 5 is a double-faced pressure-sensitive adhesive sheet having a silicone adhesive layer on the both sides of a substrate, the silicone adhesive layer on the adhesion side of the plates 1 and 2 preferably has a thickness of 5 - 50 $\mu$m, the substrate preferably has a thickness of 12 - 50 $\mu$m, and silicone adhesive layer on the jigs 7A, 7B sides preferably has a thickness of 5 - 50 $\mu$m.

When the silicone pressure-sensitive adhesive sheet 5 is a double-faced pressure-sensitive adhesive sheet having a silicone adhesive layer on one side of a substrate, and an adhesive layer comprised of an adhesive other than the silicone adhesive on the other side of the substrate, examples of the adhesive other than the silicone adhesive include various adhesives such as acrylic adhesive, rubber adhesive and the like. In such double-faced pressure-sensitive adhesive sheet, the silicone adhesive layer preferably has a thickness of 5 - 50 $\mu$m, the substrate preferably has a thickness of 12 - 50 $\mu$m, and the adhesive layer of the adhesive other than the silicone adhesive preferably has a thickness of 5 - 50 $\mu$m.

Fig. 2 shows that two plates 1 and 2 adhered via a pressure-sensitive adhesive sheet or curable resin layer 3 (adhesion laminated plate 4 wherein two plates 1 and 2 are adhered to each other via a pressure-sensitive adhesive sheet or a curable resin layer 3) are adhered to the first jig 7A and the second jig 7B, respectively, using a porous pressure-sensitive adhesive sheet 6 instead of the silicone pressure-sensitive adhesive sheet 5.

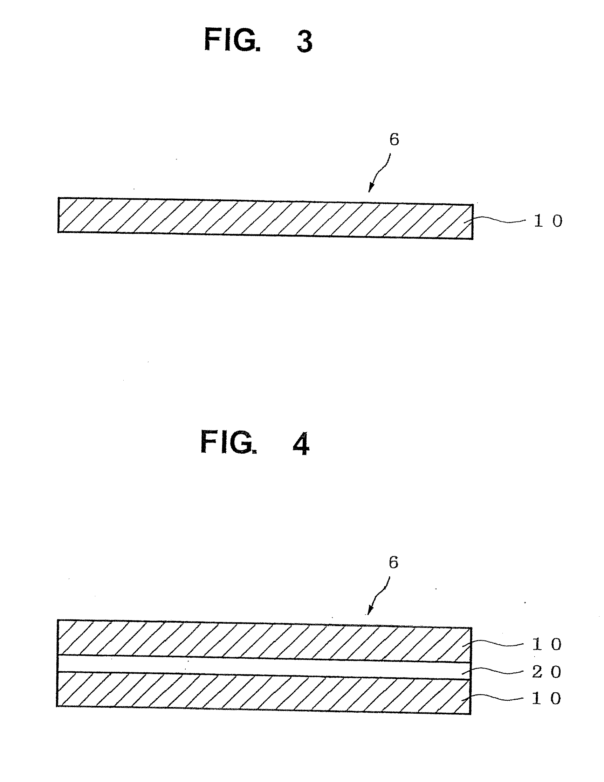

The "porous pressure-sensitive adhesive sheet" in the present invention is a pressure-sensitive adhesive sheet having many concave holes of a micron order or below (specifically less than 1000 $\mu$m, preferably not more than 750 $\mu$m, more preferably not more than 500 $\mu$m, still more preferably not more than 250 $\mu$m, particularly preferably not more than 100 $\mu$m) on the surface, which is preferably an adhesive porous sheet comprising a porous material having a continuous pore structure with a continuous hole between the adjacent spherical pores, and openings having an average pore size of 20 $\mu$m or below formed on the surface of the porous material, which act like a sucker. As the representative structure, a porous pressure-sensitive adhesive sheet 6 made of a porous material 10 alone (Fig. 3), and a porous double-faced pressure-sensitive adhesive sheet 6 having the porous material 10 and the porous material 10 on the both sides of substrate 20 (Fig. 4) can be mentioned.

The porous pressure-sensitive adhesive sheet 6 is used such that the porous material 10 adheres to plates 1 and 2. Since the openings of a micron order or below, which are formed on the surface of the porous material 10, act like a sucker, even when the surfaces on the jig side of the plates 1 and 2 is with antifouling treatment, it is assumed that the porous material 10 of the porous pressure-sensitive adhesive sheet 6 rigidly adheres to the surface with antifouling treatment and the two plates 1 and 2 are stably adhered to the jigs.

In this embodiment using a porous pressure-sensitive adhesive sheet, at least one of the two plates 1 and 2 only needs to be firmly adhered to a jig via a porous pressure-sensitive adhesive sheet. When only one of the two plates 1 and 2 is adhered to a jig via a porous pressure-sensitive adhesive sheet, the other plate may be adhered by using a thermally strippable double-faced pressure-sensitive adhesive sheet (i.e., a double-faced pressure-sensitive adhesive sheet having a pressure sensitive adhesive layer formed from a detachable pressure sensitive adhesive which is adhered by pressurization and expresses detachability by applying heat after adhesion), a UV curing type detachable double-faced pressure-sensitive adhesive sheet (i.e., a double-faced pressure-sensitive adhesive sheet having a pressure sensitive adhesive layer formed from a detachable pressure sensitive adhesive (acrylic adhesive, urethane adhesive and the like), which is adhered by pressurization, cured by UV irradiation after adhesion and expresses detachability, on both surfaces of a support substrate) and the like. The other plate may be firmly adhered to a jig by using such pressure-sensitive adhesive sheet in combination or without using such pressure-sensitive adhesive sheet, by using a jig provided with an adsorption mechanism for adsorbing a plate by suction.

In this case, when the surface on the jig side of one of the two plates 1 and 2 is a surface with antifouling treatment, and the surface on the jig side of the other plate is a surface without antifouling treatment, a porous pressure-sensitive adhesive sheet 6 is preferably used for the surface with antifouling treatment, a thermally strippable double-faced pressure-sensitive adhesive sheet, a UV curing type detachable double-faced pressure-sensitive adhesive sheet and the like may be used, instead of the porous pressure-sensitive adhesive sheet 6, between the other plate without antifouling treatment and the jig, or a surface without antifouling treatment may be firmly adhered to a jig by using such pressure-sensitive adhesive sheet in combination or without using such pressure-sensitive adhesive sheet, by using a jig provided with an adsorption mechanism for adsorbing a plate by suction.

The "spherical pore" that the porous material 10 contained in the porous pressure-sensitive adhesive sheet 6 has does not need to be a strictly perfect spherical pore and may be, for example, an about spherical pore with a partial twist or a pore made of a void with a big twist.

While the average pore size of the spherical pore that the porous material 10 contained in the porous pressure-sensitive adhesive sheet 6 has is not particularly limited as long as it is not more than a micron order (that is, less than 1000 $\mu$m), it is preferably less than 20 $\mu$m, more preferably not more than 15 $\mu$m, further preferably not more than 10 $\mu$m. The lower limit of the average pore size of the spherical pore is not particularly limited, and it is, for example, preferably 0.01 $\mu$m, more preferably 0.1 $\mu$m, further preferably 1 $\mu$m. When the average pore size of the spherical pore in the porous material 10 is within the above-mentioned range, the porous pressure-sensitive adhesive sheet 6 expresses high flexibility and high heat resistance.

The density of the porous material 10 contained in the porous pressure-sensitive adhesive sheet 6 is preferably 0.15 g/cm$^3$ - 0.6 g/cm$^3$, more preferably 0.15 g/cm$^3$ - 0.5 g/cm$^3$, further preferably 0.15 g/cm$^3$ - 0.45 g/cm$^3$, particularly preferably 0.15 g/cm$^3$ - 0.4 g/cm$^3$. When the density of the porous material 10 in the porous pressure-sensitive adhesive sheet 6 is within the above-mentioned range, the porous pressure-sensitive adhesive sheet 6 expresses high flexibility and high heat resistance.

The porous material 10 contained in the porous pressure-sensitive adhesive sheet 6 preferably has a continuous pore structure with a continuous hole between the adjacent spherical pores. The continuous pore structure may be one wherein a continuous hole is formed between almost all adjacent spherical pores in the porous material, or a semi-independent semi-continuous pore structure having a comparatively small number of continuous holes.

The continuous hole present between the adjacent spherical pores can affect the property of the porous pressure-sensitive adhesive sheet 6. For example, the smaller the average pore size of the continuous hole is, the higher the strength of the porous pressure-sensitive adhesive sheet tends to be.

The average pore size of the continuous holes present between the adjacent spherical pores is preferably not more than 5 nm, more preferably not more than 4 $\mu$m, further preferably not more than 3 $\mu$m. The lower limit of the average pore size of the continuous hole present between the adjacent spherical pores is not particularly limited and is, for example, preferably 0.001 $\mu$m, more preferably 0.01 $\mu$m. When the average pore size of the continuous hole present between the adjacent spherical pores in the porous material is within the above-mentioned range, the porous material pressure-sensitive adhesive sheet 6 expresses high flexibility and high heat resistance.

The porous pressure-sensitive adhesive sheet 6 has an opening on the surface. The opening is derived from the opening formed on the surface of the porous material 10. While the average pore size of this opening is not particularly limited as long as it is not more than a micron order, like the porous material 10 (that is, less than 1000 $\mu$m), it is preferably less than 20 $\mu$m, more preferably not more than 15 $\mu$m, further preferably not more than 10 $\mu$m, further more preferably not more than 5 $\mu$m, particularly preferably not more than 4 $\mu$m, most preferably not more than 3 $\mu$m. The lower limit of the average pore size of the opening is not particularly limited, and it is, for example, preferably 0.001 $\mu$m, more preferably 0.01 $\mu$m. When the porous pressure-sensitive adhesive sheet 6 has a surface opening and the average pore size of the surface opening is within the above-mentioned range, the surface opening acts like a sucker and a sufficient adhesive force is expressed. In addition, a porous pressure-sensitive adhesive sheet having high flexibility and high heat resistance is produced.

The porous pressure-sensitive adhesive sheet 6 preferably has a normal state shear adhesive force of not less than 1.0N/cm$^2$. With a normal state shear adhesive force of not less than 1.0N/cm$^2$, a sufficiently high adhesive force is exhibited to surfaces with various properties. The normal state shear adhesive force is preferably not less than 3N/cm$^2$, more preferably not less than 5N/cm$^2$, further preferably 7N/cm$^2$, particularly preferably not less than 9N/cm$^2$, most preferably not less than 10N/cm$^2$.

Since the adhesiveness of the porous pressure-sensitive adhesive sheet 6 mainly depends on, as mentioned above, the sucker-like surface opening, the sheet is easily detached by peeling. A 180° peel test force of the porous pressure-sensitive adhesive sheet 6 is preferably not more than 1N/25 mm, more preferably not more than 0.8N/25 mm, further preferably not more than 0.5N/25 mm, particularly preferably not more than 0.3N/25 mm. When the 180° peel test force is within the above-mentioned range, the porous pressure-sensitive adhesive sheet 6 showing high adhesiveness as mentioned above is detached extremely easily.

While the 50% compressive load of the porous pressure-sensitive adhesive sheet 6 is not particularly limited, it is preferably not more than 150 N/cm$^2$, more preferably not more than 120 N/cm$^2$, further preferably not more than 100 N/cm$^2$, particularly preferably not more than 70 N/cm$^2$, most preferably not more than 50 N/cm$^2$. When the 50% compressive load is within the above-mentioned range, the porous pressure-sensitive adhesive sheet 6 can express superior flexibility.

A porous material 10 contained in a porous pressure-sensitive adhesive sheet 6 is preferably porosity of not less than 30%, more preferably not less than 40%, further preferably not less than 50%. When, in the porous pressure-sensitive adhesive sheet 6, the porosity of the porous material 10 is within the above-mentioned range, a sufficient adhesive force can be expressed, and high flexibility and high heat resistance can be expressed.

The porous material 10 contained in the porous pressure-sensitive adhesive sheet 6 is not particularly limited as regards the constituent materials, as long as it has the aforementioned properties and features.

Then the porous pressure-sensitive adhesive sheet 6 has a substrate 20, examples of the substrate include fiber woven fabric, fiber non-woven fabric, fiber laminate fabric, fiber knitted fabric, resin sheet, metal foil sheet, inorganic fiber and the like. The thickness of the substrate may be an appropriate one according to the materials and object.

As the fiber woven fabric, a woven fabric formed from any appropriate fiber can be used. Examples of the fiber include natural fibers such as plant fiber, animal fiber, mineral fiber and the like; synthetic fibers such as regenerated fiber, synthetic fiber, semisynthetic fiber, artificial inorganic fiber and the like; and the like. Examples of the synthesis fiber include a fiber obtained by melt-spinning a thermoplastic fiber and the like. The fiber woven fabric may be processed with metal by plating, sputtering and the like.

As the fiber non-woven fabric, a non-woven fabric formed from any appropriate fiber can be used. Examples of the fiber include natural fibers such as plant fiber, animal fiber, mineral fiber and the like; synthetic fibers such as regenerated fiber, synthetic fiber, semisynthetic fiber, artificial inorganic fiber and the like; and the like. Examples of the synthesis fiber include a fiber obtained by melt-spinning a thermoplastic fiber and the like. The fiber non-woven fabric may be processed with metal by plating, sputtering and the like. More specifically, for example, a spun-bonded nonwoven fabric can be mentioned.

As the fiber laminate fabric, a laminate fabric formed from any appropriate fiber can be used. Examples of the fiber include natural fibers such as plant fiber, animal fiber, mineral fiber and the like; synthetic fibers such as regenerated fiber, synthetic fiber, semisynthetic fiber, artificial inorganic fiber and the like; and the like. Examples of the synthesis fiber include a fiber obtained by melt-spinning a thermoplastic fiber and the like. The fiber laminate fabric may be processed with metal by plating, sputtering and the like. More specifically, for example, a polyester laminate fabric can be mentioned.

As the fiber knitted fabric, a knitted fabric formed from any appropriate fiber can be used. Examples of the fiber include natural fibers such as plant fiber, animal fiber, mineral fiber and the like; synthetic fibers such as regenerated fiber, synthetic fiber, semisynthetic fiber, artificial inorganic fiber and the like; and the like. Examples of the synthesis fiber include a fiber obtained by melt-spinning a thermoplastic fiber and the like. The fiber knitted fabric may be processed with metal by plating, sputtering and the like.

As the resin sheet, a sheet formed from any appropriate resin can be used. Examples of the resin include thermoplastic resin. The resin sheet may be processed with metal by plating, sputtering and the like.

As the metal foil sheet, a sheet formed from any appropriate metal foil can be used.

As the inorganic fiber, any appropriate inorganic fiber can be used. Specific examples of the inorganic fiber include glass fiber, metal fiber, carbon fiber and the like.

When the porous pressure-sensitive adhesive sheet 6 has a vacant space in the substrate, the same material as the porous material 10 may be present in a part or all of the vacant space.

Only one kind of the substrate may be used, or two or more kinds thereof may be used in combination.

The porous pressure-sensitive adhesive sheet 6 can be produced by any appropriate method.

[Production method of porous pressure-sensitive adhesive sheet made of single porous material]

As a production method of a porous pressure-sensitive adhesive sheet, a "continuous method" including continuously supplying a continuous oil phase component and an aqueous phase component into an emulsifier to give a W/O emulsion, polymerizing the obtained W/O emulsion to give a water-containing polymer, and dehydrating the obtained hydrous polymer can be mentioned. In addition, for example, a "batch method" comprising adding an aqueous phase component in a suitable amount relative to the continuous oil phase component to the emulsifier, continuously supplying the aqueous phase component with stirring to give a W/O emulsion, polymerizing the obtained W/O emulsion to give a hydrous polymer, and successively dehydrating the obtained hydrous polymer can be mentioned.

As the production method of a porous pressure-sensitive adhesive sheet, the continuous polymerization method including continuous polymerization of a W/O emulsion is preferable since it shows high productivity, shortening effect of the polymerization time and downsizing of the polymerization apparatus.

The production method of a porous pressure-sensitive adhesive sheet more specifically and preferably includes step (I) for preparing a WIO emulsion, step (II) for coating the obtained W/O emulsion, step (III) for polymerizing the coated W/O emulsion, and step (IV) for dehydrating the obtained hydrous polymer. Here, step (II) for coating the obtained W/O emulsion and step (III) for polymerizing the coated W/O emulsion may be simultaneously performed at least partly.

[step (I) for preparing W/O emulsion]

A W/O emulsion usable for obtaining a porous material 10 is a W/O emulsion containing a continuous oil phase component and an aqueous phase component immiscible with the continuous oil phase component. More specifically explained, the W/O emulsion contains an aqueous phase component dispersed in a continuous oil phase component.

The ratio of the aqueous phase component and the continuous oil phase component in a W/O emulsion may be any appropriate ratio permitting formation of the W/O emulsion. The ratio of the aqueous phase component and the continuous oil phase component can be an important factor for determining the structural, mechanical and performance properties of the porous material obtained by polymerization of the W/O emulsion. Specifically, the ratio of the aqueous phase component and the continuous oil phase component can be an important factor for determining the density, pore size, pore structure, size of the wall forming the porous structure and the like of the porous material obtained by polymerization of the W/O emulsion.

The lower limit of the ratio of the aqueous phase component in the W/O emulsion is preferably 30 wt%, more preferably 40 wt%, further preferably 50 wt%, particularly preferably 55 wt%, and the upper limit is preferably 95 wt%, more preferably 90 wt%, further preferably 85 wt%, particularly preferably 80 wt%. When the ratio of the aqueous phase component in the W/O emulsion is within the above-mentioned range, the effect of the present invention can be sufficiently expressed.

The W/O emulsion can contain any appropriate additive as long as the effect of the present invention is not impaired. Examples of such additives include tackifier resin; talc; fillers such as calcium carbonate, magnesium carbonate, silicic acid and salts thereof, clay, mica powder, aluminum hydroxide, magnesium hydroxide, flowers of zinc, bentonite, carbon black, silica, alumina, aluminum silicate, acetylene black, aluminum powder and the like; pigment; dye; and the like. Only one kind of such additive may be used, or two or more kinds thereof may be used in combination.

The W/O emulsion can be prepared by any appropriate method. For example, a "continuous method" comprising continuously supplying a continuous oil phase component and an aqueous phase component to an emulsifier to form a W/O emulsion, a "batch method" comprising adding an aqueous phase component in a suitable amount relative to the continuous oil phase component to the emulsifier, continuously supplying the aqueous phase component with stirring to give a W/O emulsion and the like can be mentioned.

For preparation of a W/O emulsion, a shearing device to afford an emulsion state includes, for example, application of high shear conditions by using a rotor stator mixer, a homogenizer, a microfluidization apparatus and the like. In addition, a different shearing device to afford an emulsion state is, for example, mild mixing of continuous and dispersion phases by applying low shear conditions using shaking with a rotor blade mixer or a pin mixer, magnetic stirring bar and the like.

An apparatus for preparing a W/O emulsion by the "continuous method" is, for example, a static mixer, a rotor stator mixer, a pin mixer and the like. More vigorous stirring may be achieved by increasing the stirring rate, or using an apparatus designed for ultrafinely dispersing an aqueous phase component in a W/O emulsion by the mixing method.

Examples of the apparatus for preparing a W/O emulsion by the "batch method" include manual mixing, shaking, driven rotor blade mixer, mixing blade with three propellers and the like.

The method for preparing a continuous oil phase component may be any appropriate method. A representative method for preparing a continuous oil phase component includes, for example, preparing a syrup mixture containing a hydrophilic polyurethane polymer and an unsaturated ethylene monomer, and adding a polymerization initiator, a crosslinking agent, and other any appropriate components to the syrup mixture.

The method for preparing a hydrophilic polyurethane polymer may be any appropriate method. A representative method for preparing a hydrophilic polyurethane polymer includes, for example, reacting polyoxyethylene polyoxypropylene glycol with a diisocyanate compound in the presence of a urethane catalyst.

<aqueous phase component>

As the aqueous phase component, any aqueous fluid substantially immiscible with the continuous oil phase component can be employed. Water such as ion exchange water and the like is preferable from the aspects of easy handling and low cost.

The aqueous phase component can contain any appropriate additive as long as the effect of the present invention is not impaired. Examples of such additive include polymerization initiator, water-soluble salt and the like. A water-soluble salt can be an additive effective for further stabilizing W/O emulsion. Examples of such water soluble salt include sodium carbonate, calcium carbonate, potassium carbonate, sodium phosphate, calcium phosphate, potassium phosphate, sodium chloride, potassium chloride and the like. Only one kind of such additive may be used, or two or more kinds thereof may be used in combination. Only one kind of the additive may be contained in an aqueous phase component, or two or more kinds thereof may be contained in combination.

<continuous oil phase component>

The continuous oil phase component preferably contains a hydrophilic polyurethane polymer and an unsaturated ethylene monomer. The content ratio of the hydrophilic polyurethane polymer and unsaturated ethylene monomer in the continuous oil phase component may be any appropriate ratio which does not impair the effect of the present invention.

For example, the hydrophilic polyurethane polymer preferably contains 10 - 30 parts by weight of the hydrophilic polyurethane polymer relative to 70 - 90 parts by weight of the unsaturated ethylene monomer, more preferably, 10 - 25 parts by weight of the hydrophilic polyurethane polymer relative to 75 - 90 parts by weight of the unsaturated ethylene monomer, though subject to change depending on the polyoxyethylene ratio of the polyoxyethylene polyoxypropylene glycol unit constituting the hydrophilic polyurethane polymer, or the amount of the aqueous phase component to be added. For example, the amount of the hydrophilic polyurethane polymer is preferably 1 - 30 parts by weight, more preferably 1 - 25 parts by weight, per 100 parts by weight of the aqueous phase component. When the content ratio of the hydrophilic polyurethane polymer is within the above-mentioned range, the effect of the present invention can be sufficiently expressed.

(hydrophilic polyurethane polymer)

The hydrophilic polyurethane polymer preferably contains a polyoxyethylene polyoxypropylene glycol-derived polyoxyethylene polyoxypropylene unit, and 5 wt% - 25 wt% of the polyoxyethylene polyoxypropylene unit is polyoxyethylene.

The content ratio of polyoxyethylene in the above-mentioned polyoxyethylene polyoxypropylene unit is preferably 5 wt% - 25 wt% as mentioned above, wherein the lower limit is more preferably 10 wt% and the upper limit is more preferably 25 wt%, still more preferably 20 wt%. Polyoxyethylene in the above-mentioned polyoxyethylene polyoxypropylene unit shows an effect of stably dispersing the aqueous phase component in the continuous oil phase component. When the content ratio of polyoxyethylene in the above-mentioned polyoxyethylene polyoxypropylene unit is less than 5 wt%, the aqueous phase component may not be stably dispersed in the continuous oil phase component. When the content ratio of polyoxyethylene in the above-mentioned polyoxyethylene polyoxypropylene unit exceeds 25 wt%, W/O emulsion may change phase to O/W type (oil-in-water type) emulsion as the conditions become closer to the HIPE conditions.

Conventional hydrophilic polyurethane polymers are obtained by reacting a diisocyanate compound, hydrophobicity long chain diol, polyoxyethyleneglycol or a derivative thereof, and a low molecular active hydrogen compound (chain elongation agent). Since the number of polyoxyethylene groups contained in the hydrophilic polyurethane polymer obtained by such method is not uniform, a W/O emulsion containing such hydrophilic polyurethane polymer may have lower emulsion stability. The hydrophilic polyurethane polymer contained in the continuous oil phase component of the W/O emulsion used to produce the porous pressure-sensitive adhesive sheet of the present invention has the above-mentioned characteristic structure. Therefore, when the polymer is added to the continuous oil phase component of a W/O emulsion, superior emulsifiability and superior stability during standing preservation can be expressed even without addition of an emulsifier and the like.

The hydrophilic polyurethane polymer is preferably obtained by reacting polyoxyethylene polyoxypropylene glycol with a diisocyanate compound. In this case, the lower limit of the NCO/OH (equivalence ratio) of polyoxyethylene polyoxypropylene glycol and diisocyanate compound is preferably 1, more preferably 1.2, further preferably 1.4, particularly preferably 1.6, and the upper limit is preferably 3, more preferably 2.5, further preferably 2. When the NCO/OH (equivalence ratio) is less than 1, a gelled product may be easily produced during the production of the hydrophilic polyurethane polymer. When the NCO/OH (equivalence ratio) exceeds 3, the diisocyanate compound residue increases, and the W/O emulsion usable for obtaining the porous pressure-sensitive adhesive sheet of the present invention may become unstable.

Examples of the polyoxyethylene polyoxypropylene glycol include polyetherpolyol manufactured by ADEKA corporation (ADEKA (registered trade mark) pluronic L-31, L-61, L-71, L-101, L-121, L-42, L-62, L-72, L-122, 25R-1, 25R-2, 17R-2), polyoxyethylene polyoxypropylene glycol manufactured by Nippon Oil & Fats Co., Ltd. (PLONON (registered trade mark) 052, 102, 202) and the like. Only one kind of polyoxyethylene polyoxypropylene glycol may be used, or two or more kinds thereof may be used in combination.

Examples of the diisocyanate compound include aromatic, aliphatic and alicyclic diisocyanates, dimer and trimer of these diisocyanates, polyphenylmethane polyisocyanate and the like. Examples of the aromatic, aliphatic and alicyclic diisocyanates include tolylene diisocyanate, diphenylmethane diisocyanate, hexamethylene diisocyanate, xylylene diisocyanate, hydrogenated xylylene diisocyanate, isophorone diisocyanate, hydrogenated diphenylmethane diisocyanate, 1,5-naphthylene diisocyanate, 1,3-phenylene diisocyanate, 1,4-phenylene diisocyanate, butane-1,4-diisocyanate, 2,2,4-trimethylhexamethylene diisocyanate, 2,4,4-trimethylhexamethylene diisocyanate, cyclohexane-1,4-diisocyanate, dicyclohexylmethane-4,4-diisocyanate, 1,3-bis(isocyanatemethyl)cyclohexane, methylcyclohexane diisocyanate, m-tetramethylxylylene diisocyanate and the like. Examples of the trimer of diisocyanate include isocyanurate type, biuret type, allophanate type and the like. Only one kind of diisocyanate compound may be used, or two or more kinds thereof may be used in combination.

The kind, combination and the like of the diisocyanate compound can be appropriately determined in consideration of urethane reactivity with polyol and the like. Use of alicyclic diisocyanate is preferable from the aspects of quick urethane reactivity with polyol, suppression of reaction with water and the like.

The lower limit of the weight average molecular weight of the hydrophilic polyurethane polymer is preferably 5000, more preferably 7000, further preferably 8000, particularly preferably 10000, and the upper limit thereof is preferably 50000, more preferably 40000, further preferably 30000, particularly preferably 20000.

The hydrophilic polyurethane polymer may have a radical polymerizable unsaturated double bond on the terminal. When a radical polymerizable unsaturated double bond is present on the terminal of a hydrophilic polyurethane polymer, the effect of the present invention can be further expressed.

(unsaturated ethylene monomer)

As the unsaturated ethylene monomer, any appropriate monomer can be used as long as it has an ethylenically unsaturated double bond. Only one kind of unsaturated ethylene monomer may be used, or two or more kinds thereof may be used in combination.

The unsaturated ethylene monomer preferably contains (meth)acrylic ester. The lower limit of the content ratio of the (meth)acrylic ester in the unsaturated ethylene monomer is preferably 80 wt%, more preferably 85 wt%, and the upper limit thereof is preferably 100 wt%, more preferably 98 wt%. Only one kind of (meth)acrylic ester may be used, or two or more kinds thereof may be used in combination.

Preferred as the (meth)acrylic ester is alkyl (meth) acrylate having a $C_{1-20}$ alkyl group (including cycloalkyl group, alkyl(cycloalkyl) group, (cycloalkyl)alkyl group). The carbon number of the above-mentioned alkyl group is preferably 4 - 18. The (meth) acrylic means acrylic and/or methacryl, and the (meth)acrylate means acrylate and/or methacrylate.

Examples of the alkyl(meth)acrylate having a $C_{1-20}$ alkyl group include methyl (meth) acrylate, ethyl (meth) acrylate, propyl (meth)acrylate, n-butyl (meth)acrylate, s-butyl (meth)acrylate, t-butyl (meth)acrylate, isobutyl (meth) acrylate, n-pentyl (meth)acrylate, isopentyl (meth)acrylate, hexyl (meth)acrylate, heptyl (meth)acrylate, isoamyl (meth) acrylate, 2-ethylhexyl (meth)acrylate, n-octyl (meth)acrylate, isooctyl (meth)acrylate, n-nonyl (meth) acrylate, isononyl (meth) acrylate, n-decyl (meth) acrylate isodecyl (meth) acrylate, n-dodecyl (meth)acrylate, isomyristyl (meth) acrylate, n-tridecyl (meth) acrylate, n-tetradecyl (meth)acrylate, stearyl (meth)acrylate, lauryl (meth)acrylate, pentadecyl (meth) acrylate, hexadecyl (meth)acrylate, heptadecyl (meth) acrylate, octadecyl (meth) acrylate, nonadecyl(meth)acrylate, eicosyl (meth)acrylate, isostearyl(meth)acrylate and the like. Among these, n-butyl (meth) acrylate or 2-ethylhexyl(meth) acrylate is preferable. Only one kind of alkyl (meth) acrylate having a $C_{1-20}$ alkyl group may be used, or two or more kinds thereof may be used in combination.

The unsaturated ethylene monomer preferably further contains a polar monomer copolymerizable with (meth) acrylic ester. The lower limit of the content ratio of the polar monomer in the unsaturated ethylene monomer is preferably 0 wt%, more preferably 2 wt%, and the upper limit thereof is preferably 20 wt%, more preferably 15 wt%. Only one kind of polar monomer may be used, or two or more kinds thereof may be used in combination.

Examples of the polar monomer include carboxyl group-containing monomers such as (meth)acrylic acid, carboxyethyl (meth)acrylate, carboxypentyl (meth)acrylate, ω-carboxy-polycaprolactone monoacrylate, phthalic acid monohydroxyethylacrylate, itaconic acid, maleic acid, fumaric acid, crotonic acid and the like; acid anhydride monomers such as maleic anhydride, itaconic anhydride and the like; hydroxyl group-containing monomers such as 2-hydroxyethyl (meth)acrylate, 2-hydroxypropyl (meth)acrylate, 4-hydroxybutyl (meth) acrylate, 6-hydroxyhexyl (meth)acrylate, 8-hydroxyoctyl (meth)acrylate, 10-hydroxydecyl (meth)acrylate, 12-hydroxylauryl (meth) acrylate, (4-hydroxymethylcyclohexyl)methyl (meth) acrylate and the like; amide group-containing monomers such as N,N-dimethyl (meth) acrylamide, N,N-diethyl(meth)acrylamide and the like; and the like.

(polymerization initiator)

The continuous oil phase component preferably contains a polymerization initiator.

Examples of the polymerization initiator include radical polymerization initiator, redox polymerization initiator and the like. Examples of the radical polymerization initiator include thermal polymerization initiator and photo photopolymerization initiator.

Examples of the thermal polymerization initiator include an azo compound, peroxide, peroxycarbonic acid, peroxy carbonate, potassium persulphate, t-butyl peroxyisobutyrate, 2,2'-azobisisobutyronitrile and the like.

Examples of the photopolymerization initiator include acetophenone photopolymerization initiators such as 4-(2-hydroxyethoxy)phenyl(2-hydroxy-2-propyl)ketone (e.g., manufactured by BASF JAPAN Ltd., trade name; BAROCUR2959), α-hydroxy-α,α'-dimethylacetophenone (e.g., manufactured by BASF JAPAN Ltd., trade name; DAROCUR1173), methoxyacetophenone, 2,2-dimethoxy-2-phenylacetophenone (e.g., manufactured by BASF JAPAN Ltd., trade name; IRGACURE651), 2-hydroxy-2-cyclohexylacetophenone (e.g., manufactured by BASF JAPAN Ltd., trade name; IRGACURE184) and the like; ketal photo photopolymerization initiators such as benzyl dimethyl ketal and the like; other halogenated ketone; acyl phosphineoxide (e.g., manufactured by BASF JAPAN Ltd., trade name; IRGACURE819) ; and the like.

Only one kind of a polymerization initiator may be used, or two or more kinds thereof may be used in combination.

The lower limit of the content ratio of the polymerization initiator relative to the whole continuous oil phase component is preferably 0.05 wt%, more preferably 0.1 wt%, and the upper limit thereof is preferably 5.0 wt%, more preferably 1.0 wt%. When the content ratio of the polymerization initiator is less than 0.05 wt% relative to the whole continuous oil phase component, the content of unreacted monomer components increases, and the amount of the monomer residue in the obtained porous material may increase. When the content ratio of the polymerization initiator exceeds 5.0 wt% relative to the whole continuous oil phase component, the mechanical property of the obtained porous material may decrease.

The amount of the radical generated by a photopolymerization initiator varies depending on the kind, strength and irradiation time of the irradiated light, and the content of oxygen dissolved in monomer and a solvent mixture and the like. When the content of the dissolved oxygen is high, the amount of the radical generated by a photopolymerization initiator is suppressed, the polymerization does not proceed sufficiently, and unreacted products may increase. It is therefore preferable before light irradiation to blow an inert gas such as nitrogen and the like into the reaction system to substitute oxygen with the inert gas or deaerate the reaction system by a depressurization treatment.

(crosslinking agent)

The continuous oil phase component preferably contains a crosslinking agent.

The crosslinking agent is used to construct a more three-dimensional molecular structure by typically connecting polymer chains. The kind and content of the crosslinking agent vary depending on the structural property, mechanical property, and fluid treatment property that the obtained porous pressure-sensitive adhesive sheet is desired to have. Selection of specific kind and content of the crosslinking agent is important for the realization of a desirable combination of the structural property, mechanical property, and fluid treatment property of a porous pressure-sensitive adhesive sheet.

For production of a porous pressure-sensitive adhesive sheet (porous material 10), at least two kinds of crosslinking agents having different weight average molecular weights are preferably used as crosslinking agents.

More preferably, "one or more kinds selected from polyfunctional (meth)acrylate, polyfunctional (meth)acrylamide, and polymerization reactive oligomer, which have a weight average molecular weight of not less than 800" and "one or more kinds selected from polyfunctional (meth)acrylate and polyfunctional (meth)acrylamide, which have a weight average molecular weight of not more than 500" are used in combination as the crosslinking agent. Here, the polyfunctional (meth)acrylate is specifically a polyfunctional (meth)acrylate having at least two ethylene unsaturated groups in one molecule, and the polyfunctional (meth)acrylamide is specifically a polyfunctional (meth)acrylamide having at least two ethylene unsaturated groups in one molecule.

Examples of the polyfunctional (meth)acrylate include diacrylates, triacrylates, tetraacrylates, dimethacrylates, trimethacrylates, tetramethacrylates and the like.

Examples of the polyfunctional (meth)acrylamide include diacrylamides, triacrylamides, tetraacrylamides, dimethacrylamides, trimethacrylamides, tetramethacrylamides and the like.

The polyfunctional (meth)acrylate can be induced from, for example, diol, triol, tetraol, bisphenol A and the like. Specifically, for example, the polyfunctional (meth)acrylate can be induced from 1,10-decanediol, 1,8-octanediol, 1,6-hexane-diol, 1,4-butanediol, 1,3-butanediol, 1,4-butane-2-enediol, ethylene glycol, diethylene glycol, trimethylolpropane, pentaerythritol, hydroquinone, catechol, resorcinol, triethylene glycol, polyethylene glycol, sorbitol, polypropylene glycol, polytetramethylene glycol, propyleneoxide-modified bisphenol A and the like.

The polyfunctional (meth)acrylamide can be induced from, for example, corresponding diamines, triamines, tetraamines and the like.

Examples of the polymerization reactive oligomer include urethane (meth)acrylate, epoxy (meth)acrylate, copolyester (meth)acrylate, oligomer di(meth)acrylate and the like. Preferred is hydrophobic urethane (meth)acrylate.

The weight average molecular weight of the polymerization reactive oligomer is preferably not less than 1500, more preferably not less than 2000. While the upper limit of the weight average molecular weight of the polymerization reactive oligomer is not particularly set, it is, for example, preferably not more than 10000.

When "one or more kinds selected from polyfunctional (meth)acrylate, polyfunctional (meth)acrylamide, and polymerization reactive oligomer, which have a weight average molecular weight of not less than 800" and "one or more kinds selected from polyfunctional (meth)acrylate and polyfunctional (meth)acrylamide, which have a weight average molecular weight of not more than 500" are used in combination as the crosslinking agent, the lower limit of the amount of the "one or more kinds selected from polyfunctional (meth)acrylate, polyfunctional (meth)acrylamide, and polymerization reactive oligomer, which have a weight average molecular weight of not less than 800" to be used relative to the total amount of hydrophilic polyurethane polymer and unsaturated ethylene monomer in the continuous oil phase component is preferably 40 wt%, and the upper limit thereof is preferably 100 wt%, more preferably 80 wt%. When the amount of the "one or more kinds selected from polyfunctional (meth)acrylate, polyfunctional (meth)acrylamide, and polymerization reactive oligomer, which have a weight average molecular weight of not less than 800" to be used is less than 40 wt% of the total amount of hydrophilic polyurethane polymer and unsaturated ethylene monomer in the continuous oil phase component, the cohesion strength of the obtained porous pressure-sensitive adhesive sheet may decrease, thus making it difficult to simultaneously achieve toughness and flexibility. When the amount of the "one or more kinds selected from polyfunctional (meth) acrylate, polyfunctional (meth)acrylamide, and polymerization reactive oligomer, which have a weight average molecular weight of not less than 800" to be used exceeds 100 wt% relative to the total amount of hydrophilic polyurethane polymer and unsaturated ethylene monomer in the continuous oil phase component, the emulsion stability of the W/O emulsion may decrease, and a desired porous pressure-sensitive adhesive sheet (porous material 10) may not be obtained.

When "one or more kinds selected from polyfunctional (meth)acrylate, polyfunctional (meth)acrylamide, and polymerization reactive oligomer, which have a weight average molecular weight of not less than 800" and "one or more kinds selected from polyfunctional (meth)acrylate and polyfunctional (meth)acrylamide, which have a weight average molecular weight of not more than 500" are used in combination as the crosslinking agent, the lower limit of the amount of the "one or more kinds selected from polyfunctional (meth) acrylate, polyfunctional (meth)acrylamide, and polymerization reactive oligomer, which have a weight average molecular weight of not more than 500" to be used relative to the total amount of hydrophilic polyurethane polymer and unsaturated ethylene monomer in the continuous oil phase component is preferably 1 wt%, more preferably 5 wt%, and the upper limit thereof is preferably 30 wt%, more preferably 20 wt%. When the amount of the "one or more kinds selected from polyfunctional (meth) acrylate and polyfunctional (meth) acrylamide, which have a weight average molecular weight of not more than 500" to be used is less than 1 wt% of the total amount of hydrophilic polyurethane polymer and unsaturated ethylene monomer in the continuous oil phase component, the heat resistance may decrease, and the pore structure may be crushed by shrinkage in step (IV) for dehydrating the hydrous polymer. When the amount of the "one or more kinds selected from polyfunctional (meth)acrylate and polyfunctional (meth)acrylamide, which have a weight average molecular weight of not more than 500" to be used exceeds 30 wt% of the total amount of hydrophilic polyurethane polymer and unsaturated ethylene monomer in the continuous oil phase component, the toughness of the obtained porous pressure-sensitive adhesive sheet may decrease to show brittleness.

Only one kind of a crosslinking agent may be used, or two or more kinds thereof may be used in combination.

(other components in continuous oil phase component)

The continuous oil phase component may contain any other appropriate component as long as the effect of the present invention is not impaired. Representative preferable examples of such other component include catalyst, antioxidant, organic solvent and the like. Only one kind of such other component may be used, or two or more kinds thereof may be used in combination.

Examples of the catalyst include urethane catalysts. As the urethane catalyst, any appropriate catalyst can be employed. Specifically, for example, dibutyltin dilaurate can be mentioned.

The content ratio of the catalyst may be any appropriate ratio according to the desired catalytic reaction.

Only one kind of a catalyst may be used, or two or more kinds thereof may be used in combination.

Examples of the antioxidant include phenolic antioxidant, thioether antioxidant, phosphorus-based antioxidant and the like.

The content ratio of the antioxidant may be any appropriate ratio that does not impair the effect of the present invention.

Only one kind of an antioxidant may be used, or two or more kinds thereof may be used in combination.

The organic solvent may be any appropriate organic solvent that does not impair the effect of the present invention.

The content ratio of the organic solvent may be any appropriate ratio that does not impair the effect of the present invention.

Only one kind of an organic solvent may be used, or two or more kinds thereof may be used in combination.

[step (II) for coating W/O emulsion]

The method for coating a W/O emulsion in step (II) may be any appropriate coating method. For example, the method includes continuously supplying a W/O emulsion on a running belt to form a smooth sheet on the belt. Alternatively, for example, the method includes coating a surface of a thermoplastic resin film with a W/O emulsion.

In step (II), when the method includes coating the surface of a thermoplastic resin film with a W/O emulsion, examples of the coating method include use of a roll coater, a die coater, a knife coater and the like.

[step (III) for polymerization of coated W/O emulsion]

In step (III), the method of polymerization of the coated W/O emulsion may be any appropriate polymerization method. For examples, a method including continuously supplying a W/O emulsion on a running belt to form a smooth sheet on the belt while performing polymerization by heating, which uses a heating apparatus to heat the surface of a belt conveyor, a method including continuously supplying a W/O emulsion on a running belt to form a smooth sheet on the belt while performing polymerization by irradiation of an active energy beam, which uses irradiation of an active energy beam to heat the surface of a belt conveyor can be mentioned.

For polymerization by heating, the lower limit of the polymerization temperature (heating temperature) is preferably 23°C, more preferably 50°C, further preferably 70°C, particularly preferably 80°C, most preferably 90°C. The upper limit thereof is preferably 150°C, more preferably 130°C, further preferably 110°C. When the polymerization temperature is less than 23°C, the polymerization takes a long time and the industrial producibility may decrease. When the polymerization temperature exceeds 150°C, the pore size of the obtained porous pressure-sensitive adhesive sheet may be non-uniform and the strength of the porous pressure-sensitive adhesive sheet (porous material 10) may decrease. The polymerization temperature does not need to be constant, and may vary in, for example, two stages or multi stages during the polymerization.

For polymerization by irradiation of an active energy beam, examples of the active energy beam include UV, visible light, electron beam and the like. The active energy beam is preferably UV or visible light, more preferably, visible - ultraviolet ray having a wavelength of 200 nm - 800 nm. While W/O emulsion strongly tends to scatter the light, visible - ultraviolet ray having a wavelength of 200 nm - 800 nm can penetrate the W/O emulsion. In addition, a photopolymerization initiator capable of activating at a wavelength of 200 nm - 800 nm is easily available and a light source is easily obtained.

The lower limit of the wavelength of the active energy beam is preferably 200 nm, more preferably 300 nm, and the upper limit is preferably 800 nm, more preferably 450 nm.

Examples of the representative apparatus to be used for the irradiation of active energy beam include an apparatus having a spectrum distribution in a wavelength region of 300 - 400 nm, such as a UV lamp capable of UV irradiation. Examples thereof include chemical lamp, black light (trade name, manufactured by Toshiba Lighting and Technology Co., Ltd.), metal-halide lamp and the like.

The illuminance of the irradiation of active energy beam can be set to any appropriate illuminance by adjusting the distance from the irradiation equipment to the irradiated body and voltage. For example, UV irradiation in each step is divided and performed in plural steps by the method disclosed in JP-A-2003-13015, whereby adhesion performance can be precisely adjusted.

To prevent adverse influences exerted by oxygen having a polymerization inhibitory effect, for example, UV irradiation is preferably performed under an inert gas atmosphere after coating one surface of a substrate such as a thermoplastic resin film and the like with a W/O emulsion, or after coating one surface of a substrate such as a thermoplastic resin film and the like with a W/O emulsion and applying a film that allows passage of UV but shuts off oxygen such as poly(ethylene terephthalate) coated with a release agent such as silicone and the like, and the like.

As a thermoplastic resin film, any appropriate thermoplastic resin film can be employed as long as it permits coating of one surface with a W/O emulsion. Examples of the thermoplastic resin film include plastic films such as polyester, olefin resin, polyvinyl chloride and the like, and a sheet.

The inert gas atmosphere is an atmosphere wherein oxygen in light irradiation zone is substituted with an inert gas. Therefore, the least possible presence of oxygen is necessary in the inert gas atmosphere, which is preferably an oxygen concentration of not more than 5000 ppm.

[step (IV) for dehydration of obtained hydrous polymer]

In step (IV), the obtained hydrous polymer is dehydrated. An aqueous phase component is dispersed in the hydrous polymer obtained in step (III). The aqueous phase component is removed by dehydration and dried, whereby the porous material included in the porous pressure-sensitive adhesive sheet of the present invention is obtained. The obtained porous material can be directly used as the porous pressure-sensitive adhesive sheet of the present invention. As mentioned below, by combining the porous material with a substrate, the porous pressure-sensitive adhesive sheet of the present invention can also be provided.

The dehydration method for step (IV) may be any appropriate drying method. Examples of such drying method include vacuum drying, freeze-drying, press drying, microwave drying, drying in a heated oven, drying with infrared ray, a combination of these techniques, and the like.

[When porous pressure-sensitive adhesive sheet contains substrate]

When a porous pressure-sensitive adhesive sheet contains a substrate, one of the preferable embodiments of the production method of the porous pressure-sensitive adhesive sheet includes coating one surface of a substrate with a W/O emulsion and heating or irradiating an active energy beam under an inert gas atmosphere, or applying a UV-permeable film coated with a release agent such as silicone and the like to shut off oxygen, thus allowing polymerization of the W/O emulsion to give a hydrous polymer, and dehydrating the obtained hydrous polymer to give a porous pressure-sensitive adhesive sheet having a substrate/foamed layer laminate structure.

In another preferable embodiment of the production method of the porous pressure-sensitive adhesive sheet, a W/O emulsion is applied to one surface of a UV permeable film, which surface has been coated with a release agent such as silicone and the like, two such films are prepared, a substrate is laminated on the coated surface of one of the two W/O emulsion-coated sheets, the coated surface of the other W/O emulsion-coated sheet is laminated on the other surface of the laminated substrate, the resulting laminate is heated or irradiated with active energy beam to allow polymerization of the W/O emulsion to give a hydrous polymer, and the obtained hydrous polymer is dehydrated to give a porous pressure-sensitive adhesive sheet having a laminate structure of foamed layer/substrate/foamed layer.

Examples of the method for coating a W/O emulsion on one surface of a substrate or a UV permeable film coated with a release agent such as silicone and the like include use of a roll coater, a die coater, a knife coater and the like.

In the embodiment shown in the aforementioned Figs. 1 and 2, a silicone pressure-sensitive adhesive sheet 5 or a porous pressure-sensitive adhesive sheet 6 is adhered to the entire surfaces of the first jig 7A and the second jig 7B to which the opposing surfaces of the plates 1 and 2 are firmly adhered (i.e., adhered part of the jig plates where the plates are firmly fixed), wherein the entire adhered part is the adhesive surface of the silicone pressure-sensitive adhesive sheet or the porous pressure-sensitive adhesive sheet. When the jig can stably hold the plate even when the whole adhered part is not the adhesive surface of the silicone pressure-sensitive adhesive sheet 5 or the porous pressure-sensitive adhesive sheet 6, the silicone pressure-sensitive adhesive sheet 5 or porous pressure-sensitive adhesive sheet 6 may be partially adhered to the adhered part, such that the adhered part will be the adhesive surface of the partially silicone pressure-sensitive adhesive sheet or porous pressure-sensitive adhesive sheet.

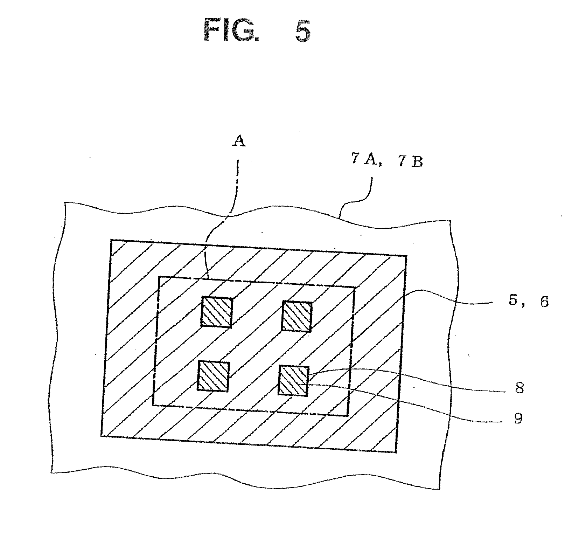

In the embodiment shown in the aforementioned Figs. 1 and 2, the plate is firmly adhered (maintained) by a jig based on the adhesion of the plates by a silicone pressure-sensitive adhesive sheet or a porous pressure-sensitive adhesive sheet. In the embodiment shown in Fig. 5, the plate is firmly adhered (maintained) by a jig based on both the silicone pressure-sensitive adhesive sheet 5 and the porous pressure-sensitive adhesive sheet 6, and plate adsorption by suction. That is, Fig. 5 is a plane view showing the opposing surfaces of the first jig 7A and the second jig 7B to the plates, wherein the silicone pressure-sensitive adhesive sheet 5 or porous pressure-sensitive adhesive sheet 6 adhered to the opposing surface has partial through holes 8 formed therein, and adsorption parts 9 to attach the plate by suction are formed inside the through holes 8 in the silicone pressure-sensitive adhesive sheet 5 or porous pressure-sensitive adhesive sheet 6. In the Figure, region A enclosed with a dashed line shows a region at which the plate is firmly adhered. Such case where a plate is firmly adhered (maintained) by two means of a silicone pressure-sensitive adhesive sheet 5 or a porous pressure-sensitive adhesive sheet 6 and adsorption by suction is advantageous in that the plate after detachment can be easily removed from the jig by terminating the suction by adsorption means or flowing the air and the like, whereby the plate after detachment can be recovered without a damage.

In the embodiments shown in the aforementioned Figs. 1 and 2 and the above-mentioned first step shown in Fig. 5, a silicone pressure-sensitive adhesive sheet 5 or a porous pressure-sensitive adhesive sheet 6 is used to firmly adhere the both plates to the first jig 7A and the second jig 7B. However, the adhered part, where the jig plate is firmly adhered, of only one plate may be constituted with a silicone pressure-sensitive adhesive sheet 5 or a porous pressure-sensitive adhesive sheet 6 and the adhered part of the other plate may be constituted with an adhesive surface of a thermally strippable double-faced pressure-sensitive adhesive sheet or a UV curing type detachable double-faced pressure-sensitive adhesive sheet and the like, or the plate may be firmly adhered by a jig that uses an adsorption mechanism alone.

In this case, when the surface on the jig side of one of the two plates 1 and 2 is a surface with antifouling treatment, and the surface on the jig side of the other plate is a surface without antifouling treatment, a silicone pressure-sensitive adhesive sheet 5 or a porous pressure-sensitive adhesive sheet 6 is preferably used for the surface with antifouling treatment, a thermally strippable double-faced pressure-sensitive adhesive sheet, a UV curing type detachable double-faced pressure-sensitive adhesive sheet and the like may be used, instead of the silicone pressure-sensitive adhesive sheet 5 or porous pressure-sensitive adhesive sheet 6, between the other plate without antifouling treatment and the jig, or a surface without antifouling treatment may be firmly adhered to a jig by using such pressure-sensitive adhesive sheet in combination or without using such pressure-sensitive adhesive sheet, by using a jig provided with an adsorption mechanism for adsorbing a plate by suction.

In the first step, even when at least one of the two plates 1 and 2 adhered via a pressure-sensitive adhesive sheet or curable resin layer 3 is a plate having one surface with antifouling treatment on the jig side, a silicone pressure-sensitive adhesive sheet 5 or a porous pressure-sensitive adhesive sheet 6 rigidly adheres to the plate, and stably adheres the two plates 1 and 2 to the jigs.

<second step>

In the second step, at least one of the first jig 7A and the second jig 7B is moved to produce a shear stress in a pressure-sensitive adhesive sheet or curable resin layer 3 interposed between two plates 1 and 2 adhered via the pressure-sensitive adhesive sheet or the curable resin layer 3, whereby the two plates 1 and 2 are detached. Here, moving at least one of the first jig 7A and the second jig 7B means moving the first jig 7A and/or the second jig 7B such that at least one of the two plates 1 and 2 moves while maintaining the distance between the opposing surfaces of two plates 1 and 2 adhered via the pressure-sensitive adhesive sheet or curable resin layer 3 substantially the same. Particularly, by moving the first jig 7A and/or the second jig 7B such that virtual straight lines parallel to each other, which are defined in each flat plane of the two plates 1 and 2, are in a twisted positional relationship, easily, a shear stress causing fracture can be easily produced in the pressure-sensitive adhesive sheet or curable resin layer.

When two plates 1 and 2 are detached by producing a shear stress causing fracture in the pressure-sensitive adhesive sheet or curable resin layer 3 interposed between the two plates 1 and 2, the plates can be detached free of crack or breakage, without substantially applying a force (load) causing a great deformation (distortion) in the thickness direction of the two plates 1 and 2, even when they are thin, have comparatively high rigidity and are susceptible to crack and breakage due to an external force.

Even when the plate has a surface with antifouling treatment, it can be maintained by suction, and the two plates can be detached while maintaining them by suction. However, when the plate is thin and poor in flexibility, a load by suction is applied to the plate to cause distortion, thereby manifesting the quality degradation of the plate after detachment.

<third step>

In the third step, two plates 1, 2 after detachment are detached from the first jig 7A and the second jig 7B, respectively. Since a silicone pressure-sensitive adhesive sheet 5 and a porous pressure-sensitive adhesive sheet 6 have removability permitting easy detachment by peeling off from the terminal portion, the plates 1 and 2 can be easily detached, together with the silicone pressure-sensitive adhesive sheet 5 or the porous pressure-sensitive adhesive sheet 6, from the jigs with ease by peeling off the silicone pressure-sensitive adhesive sheet 5 or the porous pressure-sensitive adhesive sheet 6 adhered to the opposing surfaces of the jig plates from the terminal portions thereof. Thereafter, the silicone pressure-sensitive adhesive sheet 5 or the porous pressure-sensitive adhesive sheet 6 is detached from the plates 1 and 2 and the residue of the pressure-sensitive adhesive sheet or curable resin layer 3 attached to the plates 1 and 2 is washed away with a solvent, whereby the two plates 1 and 2 are reusably reproduced.

It is also possible to reusably reproduce the two plates 1 and 2 by directly peeling off the plates 1 and 2 from the silicone pressure-sensitive adhesive sheet 5 or porous pressure-sensitive adhesive sheet 6 fixed on the jigs, instead of detaching the plates 1 and 2 together with the silicone pressure-sensitive adhesive sheet 5 or porous pressure-sensitive adhesive sheet 6 from the jigs as mentioned above, and washing away the residue of the pressure-sensitive adhesive sheet or curable resin layer 3 attached to the plates 1 and 2 with a solvent.

While the residue of the pressure-sensitive adhesive sheet or curable resin layer 3 attached to the plates detached by the method of the present invention is washed away with a solvent, a suitable solvent is selected according to the kind of the pressure-sensitive adhesive sheet and the material of the plate and the like. For example, alcohol solvents such as isopropyl alcohol and the like are preferable for acrylic pressure-sensitive adhesive sheets, and ketones (acetone, methylethyl ketone and the like), ethers (tetrahydrofuran, ethylene glycol diethyl ether and the like), and esters (methyl acetate, ethyl acetate, ethylene glycol monomethyletheracetate, ethylene glycol monoethyletheracetate, glycol diacetate etc.) can also be used. For transparent polyoxyalkylene pressure-sensitive adhesive sheets, for example, alcohol solvents such as isopropyl alcohol and the like are preferable, and ketones (acetone, methylethyl ketone and the like), ethers (tetrahydrofuran, ethylene glycol diethyl ether and the like), esters (methyl acetate, ethyl acetate, ethylene glycol monomethyletheracetate, ethylene glycol monoethyletheracetate, glycol diacetate etc.) and the like can also be used.

Examples

The present invention is explained in more detail in the following by referring to Examples and Comparative Examples.

In the following, parts and % are based on weight.

Example 1

<Production of porous pressure-sensitive adhesive sheet A>

Preparation of syrup mixture 1

A monomer solution containing 2-ethylhexyl acrylate (manufactured by TOAGOSEI CO., LTD., hereinafter to be abbreviated as "2EHA", 173.2 parts by weight) as an unsaturated ethylene monomer, ADEKA (registered trade mark) pluronicL-62 (molecular weight 2500, manufactured by ADEKA CORPORATION, polyetherpolyol, 100 parts by weight) as polyoxyethylene polyoxypropylene glycol, and dibutyltin dilaurate (manufactured by KISHIDA CHEMICAL Co., Ltd., hereinafter to be abbreviated as "DBTL", 0.014 part by weight) as a urethane catalyst were placed in a reaction vessel provided with a condenser, a thermometer and a stirrer, and hydrogenated xylylene diisocyanate (manufactured by Takeda Pharmaceutical Company Limited, Takenate 600, hereinafter to be abbreviated as "HXDI", 12.4 parts by weight) was added dropwise with stirring to allow reaction of the mixture at 65°C for 4 hr. The content ratio of the polyisocyanate component and the polyol component used was NCO/OH (equivalence ratio)=1.6. Thereafter, 2-hydroxyethyl acrylate (manufactured by KISHIDA CHEMICAL Co., Ltd., hereinafter to be abbreviated as "HEA", 5.6 parts by weight) was added dropwise, and the mixture was reacted at 65°C for 2 hr to give a syrup mixture of hydrophilic polyurethane polymer having acryloyl group on both terminals/unsaturated ethylene monomer. The weight average molecular weight of the obtained hydrophilic polyurethane polymer was 15,000. 2EHA (79.1 parts by weight), isobornylacrylate (manufactured by Osaka Organic Chemical Industry Ltd., hereinafter to be abbreviated as "IBXA", 17.6 parts by weight), and acrylic acid (manufactured by TOAGOSEI CO., LTD., hereinafter to be abbreviated as "AA", 10.5 parts by weight) as a polar monomer were added relative to 100 parts by weight of the obtained hydrophilic polyurethane polymer/unsaturated ethylene monomer syrup mixture to give hydrophilic polyurethane polymer/unsaturated ethylene monomer syrup mixture 1.

The obtained hydrophilic polyurethane polymer/unsaturated ethylene monomer syrup mixture 1 (100 parts by weight) was uniformly mixed with 1,6-hexanedioldiacrylate (manufactured by SHIN-NAKAMURA CHEMICAL CO., LTD., trade name "NKester A-HD-N", molecular weight 226, 11.9 parts by weight), urethane acrylate as a reactive oligomer, which is synthesized from polytetramethyleneglycol (hereinafter to be abbreviated as "PTMG") and isophoronediisocyanate (hereinafter to be abbreviated as "IPDI") wherein the both terminals of polyurethane are treated with HEA and the both terminals have an unsaturated ethylenic group (hereinafter to be abbreviated as "UA", molecular weight 3720, 47.7 parts by weight), diphenyl(2,4,6-trimethylbenzoyl)phosphineoxide (manufactured by BASF, trade name "Lucirin TPO", 0.5 part by weight), and a hindered phenol antioxidant (manufactured by BASF JAPAN Ltd., trade name "Irganox 1010", 1.0 part by weight to give a continuous oil phase component (hereinafter to be referred to as "oil phase"). Ion exchange water (300 parts by weight) as an aqueous phase component (hereinafter to be referred to as "aqueous phase") was continuously added dropwise relative to 100 parts by weight of the above-mentioned oil phase into a stirring blending machine, which is an emulsifying machine containing the above-mentioned oil phase, at the ambient temperature to give a stable W/O emulsion. The weight ratio of the aqueous phase and oil phase was 75/25.

The W/O emulsion stood still after the preparation at ambient temperature for 30 min was applied onto a release-treated poly(ethylene terephthalate) film (thickness 38 $\mu$m, hereinafter to be referred to as "PET film") to achieve the thickness of a highly hydrous crosslinked polymer layer of 150 $\mu$m after light irradiation, and continuously formed into a sheet. Furthermore, a 70 $\mu$m-thick polyester fiber laminate fabric (manufactured by NISSEKI PLASTO CO., LTD., trade name "Milife (registered trade mark) TY1010E"), wherein elongated polyester continuous fibers are aligned in length and breadth and laminated, was laminated thereon. Furthermore, a W/O emulsion separately stood still after the preparation at ambient temperature for 30 min was applied onto a 38 $\mu$m-thick release-treated PET film to achieve the thickness of a highly hydrous crosslinked polymer layer of 150 $\mu$m after light irradiation, and the coated surface was placed on the above-mentioned polyester fiber laminate fabric. The sheet was irradiated with UV (light illuminance 5 mW/cm$^2$ as measured by TOPCON UVR-T1 having peak sensitivity maximum wave of 350 nm) by using a black light (15 W/cm), whereby a laminate sheet having a total thickness of 310 $\mu$m, comprising the 38 $\mu$m-thick polyester fiber laminate fabric, the highly hydrous crosslinked polymer layer laminated on the both surfaces of the polyester fiber laminate fabric, and the release-treated PET film formed on the upper and lower outermost layers was obtained. Then, the upper film was detached, and the above-mentioned highly hydrous crosslinked polymer was heated at 130°C for 10 min to give a porous pressure-sensitive adhesive sheet A having a total thickness of about 0.3 mm, comprising a porous layer on the both surfaces of the polyester fiber laminate fabric.

Example 2

<Production of a porous pressure-sensitive adhesive sheet B>

In the same manner as in the production of syrup mixture 1 in Example 1 except that IBXA was used instead of 2EHA as an unsaturated ethylene monomer, a syrup mixture of hydrophilic polyurethane polymer having acryloyl group on both terminals/unsaturated ethylene monomer was obtained. The weight average molecular weight of the obtained hydrophilic polyurethane polymer was 15,000. 2EHA (38.6 parts by weight), IBXA (55.1 parts by weight), and AA (10.7 parts by weight) as a polar monomer were added relative to 100 parts by weight of the obtained hydrophilic polyurethane polymer/unsaturated ethylene monomer syrup mixture to give hydrophilic polyurethane polymer/unsaturated ethylene monomer syrup mixture 2.

In the same manner as in the production of syrup mixture 1 in Example 1 except that the hydrophilic polyurethane polymer/unsaturated ethylene monomer syrup mixture 2 obtained as mentioned above was used instead of the hydrophilic polyurethane polymer/unsaturated ethylene monomer syrup mixture 1, and NK ester A-HD-N (16 parts by weight) and UA (47.6 parts by weight) were used, an oil phase was prepared. Furthermore, ion exchange water (300 parts by weight) as an aqueous phase was continuously added dropwise relative to 100 parts by weight of the above-mentioned oil phase into a stirring blending machine, which is an emulsifying machine containing the above-mentioned oil phase, at the ambient temperature to give a stable W/O emulsion. The weight ratio of the aqueous phase and oil phase was 75/25. The obtained W/O emulsion was treated in the same manner as in Example 1 to give a porous pressure-sensitive adhesive sheet B having a total thickness of about 0.3 mm.

The properties of the porous pressure-sensitive adhesive sheets A and B are as shown in the following Table 1. The properties were measured by the following methods.

(Measurement of average pore size)

The produced porous pressure-sensitive adhesive sheet was cut with a microtome cutter in the thickness direction and used as a measurement sample. The section of the measurement sample was photographed by a scanning electron microscope (manufactured by Hitachi, Ltd., S-3400N) with 800 to 5000 magnification. Using the images, the pore size of a spherical pore in any area, the pore size of a through hole between spherical pores in any area, and the pore size of a surface opening in any area were measured, and the average pore size of the spherical pore, the average pore size of the through hole and the average pore size of the surface opening were calculated from the measurement values.

(Measurement of porosity)

Only the oil phase components during the production of an emulsion were polymerized, and the obtained polymer sheet was cut into five 100 mm x 100 mm sheets and used as test pieces to determine the apparent density by dividing the weight by the volume. The average of the obtained apparent densities was used as the density of a resin component constituting the porous material of a porous pressure-sensitive adhesive sheet. The porosity of the porous material was calculated from the following formula by using the relative density obtained by dividing the density of the porous material by the above-mentioned density of the resin component.

$$\text{porosity} = (1-\text{relative density}) \times 100$$

Table 1

|  | average pore size of spherical pore | average pore size of through hole | average pore size of surface opening | porosity |
|---|---|---|---|---|
| porous pressure-sensitive adhesive sheet A | 3.9 $\mu$m | 1.1 $\mu$m | 2.3 $\mu$m | 75% |
| porous pressure-sensitive adhesive sheet B | 3.6 $\mu$m | 0.9 $\mu$m | 2.4 $\mu$m | 75% |

The porous pressure-sensitive adhesive sheets A and B obtained in Examples 1 and 2 were subjected to the following antiskid evaluation test.

<Antiskid evaluation test>

A porous pressure-sensitive adhesive sheet was adhered to an acrylic board, a glass plate with an antifouling-treated surface was placed on the porous pressure-sensitive adhesive sheet, and the rotary shear stress endurance level was evaluated while pressing the glass plate and according to the following criteria. The results are shown in the following Table 2.

(Evaluation criteria)

⊙ : no movement

⊙ : movement in 1 mm - 5 mm

x: easy glass movement in stress application direction

Examples 3 - 5, Comparative Examples 1 - 2

The above-mentioned antiskid evaluation test was performed using the pressure-sensitive adhesive sheets for fixing, which are shown in the following Table 2, instead of a porous pressure-sensitive adhesive sheet.

Table 2

|  | pressure-sensitive adhesive sheet for fixing | antiskid evaluation results |
|---|---|---|
| Example 1 | porous pressure-sensitive adhesive sheet A | ⊙ |
| Example 2 | porous pressure-sensitive adhesive sheet B | ○ |
| Example 3 | N-300 | ⊙ |
| Example 4 | No. 3630H | ○ |
| Example 5 | TRN-6250L | ○ |
| Comparative Example 1 | No. 5000NS | × |
| Comparative Example 2 | dashboard storage sheet | × |

In Table 2, "N-300" is a silicone pressure-sensitive adhesive sheet (trade name "N-300", manufactured by NITTO DENKO CORPORATION), "No.3630H" is a silicone pressure-sensitive adhesive sheet (trade name "No.3630H", manufactured by NITTO DENKO CORPORATION), "TRM-6250L" is a silicone pressure-sensitive adhesive sheet (trade name "TRM-6250L", manufactured by NITTO DENKO CORPORATION), and "No.5000NS" is an acrylic adhesive tape (trade name "No.5000NS", manufactured by NITTO DENKO CORPORATION) . The "Dashboard storage sheet" was obtained from a general automotive supply shop.

It is clear from the results of Table 2 that use of the porous pressure-sensitive adhesive sheet or silicone pressure-sensitive adhesive sheet of the present invention can prevent, at a higher level, plate skid when a rotary shear stress is applied to an adhered plate, as compared to conventional acrylic adhesive tapes and the like. Hence, using the porous pressure-sensitive adhesive sheet or silicone pressure-sensitive adhesive sheet, a plate can be stably fixed by a jig and a detaching operation of two plates can be stably carried out.

According to the present invention, two plates adhered to each other via a pressure-sensitive adhesive sheet or a curable resin layer can be detached, even when at least one of the two plates is a thin and lacks flexibility, without substantially applying a load causing a big distortion (deformation) leading to breakage or crack of the plate. Particularly, two optical plates adhered via a transparent pressure-sensitive adhesive sheet or a curable resin layer, which are set on the display surface side of the flat panel display; for example, a display panel and a transparent protection plate, a display panel and a glass plate with transparent electrodes in a touch panel, a glass plate with transparent electrodes in a touch panel and a transparent protection plate etc., are thin, poor in flexibility. Using the method of the present invention, such two optical plates can be separated free of breakage or crack of the plate. Therefore, the present invention can be particularly advantageously practiced in fields of flat panel display and device with display function carrying the flat panel display.

**Claims**

1.  A method of separating two adhered plates, comprising
    step 1 for firmly adhering two plates adhered to each other via a pressure-sensitive adhesive sheet or a curable resin layer to a first jig and a second jig, respectively,

step 2 for detaching the two plates by moving at least one of the first jig and the second jig to produce a shear stress causing breakage of the pressure-sensitive adhesive sheet or the curable resin layer, and

step 3 for removing the two plates after detachment from the jigs,

wherein, in the aforementioned step 1, one or both of the plates is(are) firmly adhered to the jig(s) via a silicone pressure-sensitive adhesive sheet or porous pressure-sensitive adhesive sheet.

2. The method according to claim 1, wherein at least one of the two plates has a surface with antifouling treatment, and the surface with the antifouling treatment and the jig are firmly adhered to each other via the aforementioned silicone pressure-sensitive adhesive sheet or porous pressure-sensitive adhesive sheet.

3. The method according to claim 1 or 2, wherein the aforementioned two plates are adhered via a pressure-sensitive adhesive sheet,

the two plates are optical plates, and the pressure-sensitive adhesive sheet is a transparent pressure-sensitive adhesive sheet.

4. The method according to claim 1, wherein the two plates are adhered via a pressure-sensitive adhesive sheet, one of the two plates is a display panel of a flat panel display, the other is a transparent protection plate of the aforementioned display panel, the pressure-sensitive adhesive sheet is a transparent pressure-sensitive adhesive sheet, the aforementioned transparent protection plate has one surface with antifouling treatment, and said surface with the antifouling treatment is adhered to the silicone pressure-sensitive adhesive sheet or porous pressure-sensitive adhesive sheet.

5. An apparatus for separating two plates adhered to each other via a pressure-sensitive adhesive sheet or a curable resin layer, comprising a first jig and a second jig which are placed opposite, with at least one of them being movable, wherein one or both of the first jig and the second jig has(have) an adhered part made of an adhesive surface of a silicone pressure-sensitive adhesive sheet or porous pressure-sensitive adhesive sheet,

which apparatus is used for detaching the two plates by setting the plates between the first jig and the second jig, firmly adhering one of the two plates to the first jig, firmly adhering the other to the second jig, and moving at least one of the first jig and the second jig.

6. The apparatus according to claim 5, wherein the adhered part has an adsorption part for adsorbing the plates by suction.

7. The apparatus according to claim 5 or 6, wherein at least one of the two plates has a surface with antifouling treatment, and

the surface with the antifouling treatment is firmly adhered to the jig.

8. The apparatus according to any one of claims 5 to 7, wherein the two plates are adhered via a pressure-sensitive adhesive sheet,

two plates are optical plates, and the pressure-sensitive adhesive sheet is a transparent pressure-sensitive adhesive sheet.

9. The apparatus according to claim 5 or 6, wherein one of the two plates is a display panel of a flat panel display, the other is a transparent protection plate of the aforementioned display panel, the pressure-sensitive adhesive sheet is a transparent pressure-sensitive adhesive sheet, the aforementioned transparent protection plate has one surface with antifouling treatment, and said surface with the antifouling treatment is adhered to the silicone pressure-sensitive adhesive sheet or porous pressure-sensitive adhesive sheet.

10. A pressure-sensitive adhesive sheet comprised of a silicone pressure-sensitive adhesive sheet or a porous pressure-sensitive adhesive sheet, which is used for firmly adhering one or both of the aforementioned two plates to a jig in step 1 of the method according to any one of claims 1 to 4.

# FIG. 1

# FIG. 2

# FIG. 3

# FIG. 4

FIG. 5

Europäisches
Patentamt

European
Patent Office

Office européen
des brevets

# EUROPEAN SEARCH REPORT

**Application Number**

EP 12 17 8500

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/129658 A1 (SUZUKI TATSUYA [JP] ET AL) 27 May 2010 (2010-05-27) | 10 | INV.<br>C09J5/00<br>B32B43/00 |
| Y | * abstract *<br>* paragraph [0043] - paragraph [0055] *<br>* paragraph [0067] - paragraph [0099]; claims 1,3,5-9; examples *<br>& JP 2010 121134 A (NITTO DENKO CORP) 3 June 2010 (2010-06-03)<br>* abstract * | 1-9 | |
| X | US 5 869 150 A (IWAMOTO MAKOTO [JP]) 9 February 1999 (1999-02-09) | 10 | |
| Y | * claims 1,2,5; example 1 * | 1-9 | |
| X | EP 1 894 662 A2 (NITTO DENKO CORP [JP]) 5 March 2008 (2008-03-05)<br>* abstract; claims 1,2,6 * | 10 | |

| | TECHNICAL FIELDS SEARCHED (IPC) |
|---|---|
| | C09J<br>B32B |

The present search report has been drawn up for all claims

| Place of search | Date of completion of the search | Examiner |
|---|---|---|
| Munich | 23 November 2012 | Meier, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 17 8500

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2012

| Patent document cited in search report | | Publication date | Patent family member(s) | | Publication date |
|---|---|---|---|---|---|
| US 2010129658 | A1 | 27-05-2010 | CN | 101734000 A | 16-06-2010 |
| | | | JP | 2010121134 A | 03-06-2010 |
| | | | KR | 20100057521 A | 31-05-2010 |
| | | | TW | 201026506 A | 16-07-2010 |
| | | | US | 2010129658 A1 | 27-05-2010 |
| US 5869150 | A | 09-02-1999 | CN | 1118075 A | 06-03-1996 |
| | | | DE | 19508502 A1 | 25-01-1996 |
| | | | JP | 3081122 B2 | 28-08-2000 |
| | | | JP | 8086993 A | 02-04-1996 |
| | | | US | 5869150 A | 09-02-1999 |
| | | | US | 6037026 A | 14-03-2000 |
| EP 1894662 | A2 | 05-03-2008 | CN | 101134877 A | 05-03-2008 |
| | | | EP | 1894662 A2 | 05-03-2008 |
| | | | KR | 20080020515 A | 05-03-2008 |
| | | | TW | 200831631 A | 01-08-2008 |
| | | | US | 2008057253 A1 | 06-03-2008 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010121134 A
- JP H9157582 A
- JP H11217558 A
- JP 2000144097 A
- JP 2005290323 A
- JP 2007145884 A

- JP 2008156454 A
- JP 2005054029 A
- JP 2008088323 A
- JP 2006124417 A
- JP 2008266473 A
- JP 2003013015 A